# EUROPÄISCHE PATENTANMELDUNG

(11) **EP 4 230 341 A1**
(43) Veröffentlichungstag der Anmeldung: **23.08.2023**
(21) Anmeldenummer: 22157252.2
(22) Anmeldetag: 17.02.2022
(51) Int. Cl.: B23K 26/03, B23K 26/38, B23K 31/00, B23K 31/12

(54) **VERFAHREN UND VORRICHTUNG ZUM LASERSCHNEIDEN EINES WERKSTÜCKS**

(71) Anmelder: Bystronic Laser AG, 3362 Niederönz (CH)
(72) Erfinder: LUEDI, Andreas, 3400 Burgdorf (CH); BADER, Roland, 4933 Rütschelen (CH); HERWIG, Patrick, 01237 Dresden (DE)
(74) Vertreter: Patentanwälte Geyer, Fehners & Partner mbB

(57) **Zusammenfassung**

Die Erfindung betrifft ein Verfahren zum Laserschneiden eines Werkstücks und eine Vorrichtung zum Laserschneiden mit einem Schneidkopf. Das Verfahren beinhaltet Bestrahlen des Werkstücks mit einem Bearbeitungslaserstrahl, Schneiden des Werkstücks in einer Schneidrichtung in einer Prozesszone (S1) und Erfassen von 1 bis n Bildern der Prozesszone in wenigstens einem Teil eines Beleuchtungslichts, das von der Prozesszone reflektiert wird, und/oder in wenigstens einem Teil eines Prozesslichts, das durch eine Wechselwirkung des Bearbeitungslaserstrahls mit dem Werkstück erzeugt wird und von der Prozesszone emittiert wird, mittels einer Bilderfassungseinrichtung (S2). Dabei wird jedes der 1 bis n Bilder als eine Schar von zeitgleichen Teilbildern T₁ bis Tₘ erfasst, wobei jedes der Teilbilder T₁ bis Tₘ der Schar sich unterscheidet durch wenigstens ein optisches Merkmal. Mindestens ein Schnittqualitätsmerkmal wird aus der Schar von Teilbildern T₁ bis Tₘ mindestens eines der 1 bis n Bilder ermittelt (S3).

## Beschreibung

Die Erfindung betrifft ein Verfahren zum Laserschneiden eines Werkstücks, eine Vorrichtung zum Laserschneiden eines Werkstücks und ein Computerprogrammprodukt.

Bei einem Verfahren zum Laserschneiden eines Werkstücks und einer Vorrichtung zum Laserschneiden eines Werkstücks sind die Schneidqualität, die Schneidgeschwindigkeit und die Maschinenautonomie wichtige Gesichtspunkte. Kann der Schneidprozess gut überwacht werden, kann die Vorrichtung zum Laserschneiden in allen drei wesentlichen Gesichtspunkten verbessert werden. Dementsprechend gewann die Überwachung des Schneidprozesses in den letzten Jahren Bedeutung. Bekannte Vorrichtungen zum Laserschneiden sind oft mit Fotodioden und teilweise mit Kameras ausgerüstet, welche eine Echtzeitüberwachung des Bearbeitungsprozesses als Punktinformation oder zweidimensionale Flächeninformation ermöglichen. Für moderne Vorrichtungen zum Laserschneiden wird vermehrt eine umfassende Prozess-Sensorik eingesetzt, womit Schneidabriss und Qualitätseinbußen, z.B. raue Schnittkanten, Gratanhaftung und Schlackenbildung an den geschnittenen Werkstücken gut erkannt werden können. Qualitätseinbußen treten jedoch nicht über die ganze Dicke des geschnittenen Werkstücks, sondern in einzelnen Ebenen auf, wie z.B. Grat an der Unterseite des geschnittenen Werkstücks.

Einige Schneidmaschinen ermöglichen die Beobachtung des Schneidprozesses mit einer Fotodiode, die z.B. in einem Schneidkopf vorgesehen ist. Dies ergibt eine Punktinformation, wobei über den beobachteten Ort räumlich integriert wird. Mit einer solchen Überwachung kann allerdings nur ein übermäßiges Aufglühen oder ein Plasmaschnitt erkannt werden. Es sind auch Schneidprozessbeobachtungen bekannt, in welchen Kameras eingesetzt werden. Mithilfe einer Kamera kann ein zweidimensionales Abbild des Prozesses gemacht werden, womit im Vergleich zur Fotodiode mehr über den Bearbeitungsprozess ausgesagt und die Schneidperformance überwacht und optimiert werden kann.

Charakteristisch für den Schneidzustand und für die Schneidqualität, auch Schnittqualität genannt, ist das Prozessleuchten mit der Leuchtfackel, der erzeugte Schnittspalt mit der an dessen Schnittkante auftretenden Riefenbildung und die erzeugte Schnittfront. Untersuchungen sind bekannt, welche die dreidimensionale Geometrie der Schnittfront durch Beobachtung von Polarisationszuständen bestimmen, vgl. M. Sawannia et al., «Determination of the 3D-Geometry of Cutting Fronts with High Temporal Resolution», LiM 2019. Die dafür eingesetzte Apparatur ist sehr groß. Weiter nachteilig ist, dass die Beobachtung nicht echtzeitfähig ist, da die rechenintensive Rekonstruktion einer Schnittfront einige Minuten dauert. Zudem muss die Schnittfrontbeobachtung außer-axial, d.h. von der Seite erfolgen, was die Beobachtung richtungsabhängig macht.

Aufgabe der Erfindung ist es, ein Verfahren und eine Vorrichtung zum Laserschneiden eines Werkstücks bereitzustellen, welche eine aussagekräftige Überwachung des Schneidprozesses und der Schneidqualität ermöglichen.

Diese Aufgabe wird gelöst durch ein Verfahren zum Laserschneiden eines Werkstücks nach Anspruch 1, eine Vorrichtung zum Laserschneiden eines Werkstücks nach Anspruch 7, sowie ein Computerprogrammprodukt nach Anspruch 15.

Eine Ausführungsform betrifft ein Verfahren zum Laserschneiden eines Werkstücks, mittels einer Vorrichtung zum Laserschneiden mit einem Schneidkopf; mit den Schritten Bestrahlen des Werkstücks mit einem Bearbeitungslaserstrahl, Schneiden des Werkstücks in einer Schneidrichtung und Erzeugen einer Prozesszone, und insbesondere Erzeugen eines Schnittspalts; und Erfassen von 1 bis n Bildern der Prozesszone in wenigstens einem Teil eines Beleuchtungslichts, das von der Prozesszone reflektiert wird, und/oder in wenigstens einem Teil eines Prozesslichts, das durch eine Wechselwirkung des Bearbeitungslaserstrahls mit dem Werkstück erzeugt wird und von der Prozesszone emittiert wird, mittels einer Bilderfassungseinrichtung; wobei jedes der 1 bis n Bilder als eine Schar von zeitgleichen Teilbildern T₁ bis Tₘ erfasst wird, wobei jedes oder eine Mehrzahl der Teilbilder T₁ bis Tₘ der Schar sich unterscheidet durch wenigstens ein optisches Merkmal ausgewählt aus a. einem Erfassungswinkel zur Prozesszone, b. einer Brennweite einer Optik der Bilderfassungseinrichtung in Richtung der Prozesszone, und c. einer Polarisation, insbesondere Polarisationswinkel und/oder Polarisationsgrad, des erfassten Prozesslichts und/oder des erfassten Beleuchtungslichts; und mindestens ein Schnittqualitätsmerkmal aus der Schar von Teilbildern T₁ bis Tₘ mindestens eines der 1 bis n Bilder ermittelt wird.

In dem Verfahren werden mittels der Bilderfassungseinrichtung pro Bild eine Schar zeitgleicher Teilbilder T₁ bis Tₘ, im Folgenden auch Teilbilder genannt, erhalten, die sich in wenigstens einem optischen Merkmal unterscheiden. So kann jedes Bild der 1 bis n Bilder als ein Bilderfassungsdatenfeld erhalten werden. Jedes Bild und/oder Bilderfassungsdatenfeld enthält aus den unterschiedlichen optischen Merkmalen resultierende Informationen. Auf diese Weise können differenzierte Bilderfassungsdaten über die Prozesszone erhalten werden. Die 1 bis n Bilder können zeitlich nacheinander erfasst werden. In einer ersten Variante des Verfahrens wird pro Bild eine Schar von Teilbilder erhalten, die sich in dem Erfassungswinkel zur Prozesszone unterscheiden. In einer zweiten Variante des Verfahrens wird pro Bild eine Schar von Teilbilder erhalten, die sich in der Brennweilte einer Optik der Bilderfassungseinheit in Richtung der Prozesszone unterscheiden. Durch eine dritte Variante des Verfahrens wird pro Bild eine Schar von Teilbilder erhalten, die sich in der Polarisation des erfassten Prozesslichts und/oder des erfassten Beleuchtungslichts unterscheiden. Eine weitere Variante des Verfahrens erzeugt pro Bild eine Schar von Teilbildern, die sich in einer Kombination aus zwei oder drei der genannten optischen Merkmale unterscheiden. Mit allen Varianten des Verfahrens können Informationen aus der Prozesszone gewonnen und somit Schnittqualitätsmerkmale ermittelt werden. Dabei ist in allen Varianten des Verfahrens der Informationsgehalt in den erfassten Bildern in Bezug auf die Schnittqualität optimiert. Die Informationen können mit dem Verfahren räumlich und/oder zeitlich differenziert erhalten werden. Mithilfe den aus der Prozesszone gewonnenen Informationen können Qualitätseinbußen erkannt und in der Folge durch Anpassung von Prozessparameter des Laserschneidens bestmöglich behoben werden. Qualitätseinbußen können ferner über die ganze Dicke des geschnittenen Werkstücks, z.B. in einzelnen Ebenen erkannt werden, wie z.B. Grat an der Unterseite des geschnittenen Werkstücks. Das Verfahren kann beim Laserschneiden eines Werkstücks, das z.B. mindestens ein Metall in seinem Werkstückmaterial enthält, eingesetzt werden. Auf diese Weise kann z.B. die Geometrie des Schnittspalts und/oder das Prozesslicht, auch Prozessleuchten genannt, charakterisiert werden. Ist die Geometrie des Schnittspalts und das Prozessleuchten charakterisiert, kann der Schneidzustand abgeleitet und das Laserschneiden optimal geregelt werden (Schneidregelung). So kann die Schneidqualität und/oder die Schneidperfomance überwacht und optimiert werden. Es kann ferner eine außerordentlich stabile und genaue Schneidqualitätsabschätzung und/oder Schneidregelung realisiert werden. Die Schneidqualitätsabschätzung und/oder Schneidregelung kann ferner in Echtzeit während des Laserschneidens erfolgen. Es kann eine Mehrzahl von Erfassungswinkeln in einem Bereich von 0° bis 20°, bevorzugt von 0° bis 15°, mehr bevorzugt von 0° oder von 0,5° bis 10°, weiter bevorzugt 5° bis 20°, erfasst werden.

In allen oder einigen Ausführungsformen und Abwandlungen davon kann das mindestens eine Schnittqualitätsmerkmal ausgewählt sein aus: Riefen der Schnittkante, Rauheit der Schnittkante, Welligkeit der Schnittkante, Rechtwinkligkeit der Schnittkante, Schlacke, insbesondere Schlackenrückstand im Schnittspalt oder Schlackenrückstand an der Unterseite der Schnittkante, Gratanhaftung am geschnittenen Werkstück, insbesondere Grat gemessen als Grathöhe und/oder Gratvolumen an der Unterseite der Schnittkante, Plasmabildung, Abriss, zeitlicher Verlauf von räumlichen und/oder örtlichen Schnittqualitätsmerkmalen, Varianz der räumlichen und/oder örtlichen Schnittqualitätsmerkmale als zeitlicher Verlauf, und einer beliebigen Kombination davon. In allen oder einigen Ausführungsformen und Abwandlungen können in den Bildern und/oder Teilbildern dreidimensionale Informationen enthalten sein. Das mindestens eine Schnittqualitätsmerkmal kann aus einer beim Laserschneiden entstehenden und am Werkstück haftenden Schmelze des Werkstückmaterials, auch Schmelzbad genannt, resultieren.

In dem Verfahren können die 1 bis n Bilder mit mindestens einem Strahlungsintensitätssensor der Bilderfassungseinrichtung erfasst werden, dem mindestens ein optisches Mittel vorgeschaltet wird oder ist, ausgewählt aus
- einer Schar von nebeneinander angeordneten Mikrolinsen zur Erfassung des reflektierten Beleuchtungslichts und/oder des Prozesslichts aus mehreren einzelnen Erfassungswinkeln und/oder mit mehreren einzelnen Brennweiten;
- einer Schar von Spiegeln zur Erfassung des reflektierten Beleuchtungslichts und/oder des Prozesslichts aus mehreren einzelnen Erfassungswinkeln unter kaleidoskopischer Mehrfachreflexion; und
- einer Schar von nebeneinander angeordneten Mikropolarisationsfiltern zur Erfassung des reflektierten Beleuchtungslichts und/oder des Prozesslichts mit mehreren einzelnen Polarisationen.

Der Strahlungsintensitätssensor kann flächig ausgebildet sein. In der Schar von nebeneinander angeordneten Mikrolinsen können die Mikrolinsen flächig nebeneinander angeordnet sein. In der Schar von nebeneinander angeordneten Mikropolarisationsfiltern können die Mikropolarisationsfilter flächig nebeneinander angeordnet sein. Die Schar von nebeneinander angeordneten Mikrolinsen kann gleiche und/oder unterschiedliche Mikrolinsen enthalten. Der Strahlungsintensitätssensor kann in Ausführungsformen und Abwandlungen davon für das Beleuchtungslicht und/oder das Prozesslicht empfindlich sein.

Auf diese Weise kann pro Bild eine Schar von Teilbildern mit einer Mehrzahl einzelner Erfassungswinkel und/oder mit einer Mehrzahl einzelner Brennweiten und/oder mit einer Mehrzahl einzelner Polarisationen erfasst werden. Jedes Bild der 1 bis n Bilder kann als ein mit dem Strahlungsintensitätssensor erzeugtes Sensordatenfeld erhalten werden. Jedes Bild und/oder Sensordatenfeld enthält aus den unterschiedlichen optischen Merkmalen resultierende Informationen. Dadurch wird eine differenzierte Bilderfassung der Prozesszone und/oder die Gewinnung differenzierter Informationen über die Prozesszone und über die Schneidqualität ermöglicht. Der Strahlungsintensitätssensor kann als ein flächiger Sensor ausgebildet sein. Der Sensor kann beispielsweise als ein CMOS-Chip, ein CCD-Chip, ein zweidimensionaler Diodenarray oder ein eindimensionaler Diodenarray, auch Zeilensensor genannt, ausgebildet sein. Im Falle eines eindimensionalen Diodenarrays kann dieser quer zur Schneidrichtung ausgerichtet sein.

Das Verfahren kann eine Kalibrierung des mindestens einen optischen Mittels beinhalten. Die Schar von Spiegeln zur Erfassung des reflektierten Beleuchtungslichts und/oder des Prozesslichts aus mehreren einzelnen Erfassungswinkeln unter kaleidoskopischer Mehrfachreflexion besitzt im Vergleich zur Schar der Mikrolinsen die Vorteile von geringeren Herstellungskosten und einer einfacheren Kalibrierung unter Bereitstellung der gleichen Erfassungswinkel.

In dem Verfahren kann die Schar von nebeneinander angeordneten Mikrolinsen, die Schar von Spiegeln zur Erfassung unter kaleidoskopischer Mehrfachreflexion und/oder die Schar von nebeneinander angeordneten Mikropolarisationsfiltern dem Strahlungsintensitätssensor in Ausbreitungsrichtung des Lichts räumlich hintereinander vorgeschaltet sein oder werden. Durch räumliches Hintereinanderschalten dieser optischen Mittel kann eine Kombination aus zwei oder drei der genannten optischen Merkmale realisiert werden. Die Schar von nebeneinander angeordneten Mikrolinsen, die Schar von Spiegeln zur Erfassung unter kaleidoskopischer Mehrfachreflexion und/oder die Schar von nebeneinander angeordneten Mikropolarisationsfiltern können dem Strahlungsintensitätssensor ferner zeitlich abwechselnd vorgeschaltet werden. So kann je nach Bedarf eines der optischen Mittel einzeln oder mehrere der optischen Mittel räumlich hintereinander dem Strahlungsintensitätssensor in Ausbreitungsrichtung des Lichts vorgeschaltet werden. Das Licht beinhaltet den wenigstens einen Teil des Beleuchtungslichts, das von der Prozesszone reflektiert wird, und/oder den wenigstens einen Teil des Prozesslichts, das durch eine Wechselwirkung des Bearbeitungslaserstrahls mit dem Werkstück erzeugt wird und von der Prozesszone emittiert wird.

In dem Verfahren können die 1 bis n Bilder mit mindestens einem temperaturkalibrierten Strahlungsintensitätssensor erfasst werden und die Strahlungstemperatur des Prozesslichts kann bestimmt werden. Auf diese Weise kann mit den 1 bis n Bildern eine Temperaturverteilung über und/oder in der Prozesszone ermittelt werden, z.B. ein Temperaturfeld über der dreidimensionalen Geometrie der Prozesszone. Ferner kann anhand der so erfassten 1 bis n Bilder eine Geschwindigkeitsverteilung eines Schmelzbades in der Prozesszone erhalten werden, aus der z.B. Differenzbilder der Schnittspaltgeometrie erzeugt werden können.

In dem Verfahren kann das mindestens eine Schnittqualitätsmerkmal basierend auf mindestens einem Element ausgewählt aus einer Geometrie der Prozesszone, insbesondere einer Geometrie des Schnittspalts, einer Temperaturverteilung über und/oder in der Prozesszone, insbesondere über und/oder in dem Schnittspalt, einer Geschwindigkeitsverteilung eines Schmelzbades in der Prozesszone, insbesondere in dem Schnittspalt und/oder entlang des Schnittspalts, und mindestens einem Differenzbild der Geometrie der Prozesszone, insbesondere mindestens einem Differenzbild der Geometrie des Schnittspalts, als eine in der Schar der Teilbilder von zumindest einem der 1 bis n Bilder enthaltene 3D-Information, auch dreidimensionale Information genannt, ermittelt werden. Die Geometrie der Prozesszone beinhaltet die Geometrie des Schnittspalts und/oder die Geometrie einer Schnittfront des Schnittspalts. Die Geschwindigkeitsverteilung des Schmelzbades kann sich auf die ortsabhängige Fließgeschwindigkeit und/oder die ortsabhängige Strömungsgeschwindigkeit des Schmelzbades und/oder einer im Schmelzbad enthaltenen geschmolzenen Komponente des Werkstückmaterials beziehen.

In dem Verfahren kann ein Beleuchtungslichtstrahl einer Beleuchtungseinrichtung, insbesondere als das Beleuchtungslicht, auf die Prozesszone geleitet werden. Der Bearbeitungslaserstrahl und der Beleuchtungslichtstrahl können zumindest teilweise koaxial, insbesondere jeweils in einem Winkel von im Wesentlichen 90° zur Werkstückoberfläche, auf die Prozesszone geleitet werden. Beim Erfassen der 1 bis n Bilder kann zumindest ein Teil des von der Prozesszone reflektierten Beleuchtungslichtstrahls und/oder zumindest ein Teil des Prozesslichts erfasst werden, der jeweils koaxial zum auf die Prozesszone auftreffenden Bearbeitungslaserstrahl verläuft. Die Bilderfassung kann auf diese Weise zumindest teilweise koaxial mit dem Bearbeitungslaserstrahl realisiert werden und ist somit kompakt und richtungsunabhängig.

In dem Verfahren können Teilbilder mit einem Erfassungswinkel in einem Bereich von 0° bis 20°, bevorzugt zwischen 0° und 15°, zur Prozesszone ausgewählt werden, z.B. für eine Auswertung der Teilbilder. Es können Teilbilder mit gleichen und/oder unterschiedlichen Erfassungswinkeln ausgewählt werden. Ferner kann die Schar von Mikrolinsen und/oder die Schar von Spiegeln eine Mehrzahl von Erfassungswinkeln in einem Bereich von 0° bis 20°, bevorzugt zwischen 0° und 15°, zur Prozesszone bereitstellen.

Der Erfassungswinkel zur Prozesszone kann in Ausführungsformen des Verfahrens und/oder der Vorrichtung und in Abwandlungen davon als ein Winkel relativ zu einer Senkrechten auf die Werkstückoberfläche verstanden werden. Wird eine ebene Werkstückoberfläche eines Werkstücks geschnitten, kann der Erfassungswinkel als ein Winkel relativ zu einer Senkrechten auf die Ebene der Werkstückoberfläche verstanden werden. Wird eine gekrümmte Werkstückoberfläche eines Werkstücks geschnitten, kann der Erfassungswinkel als ein Winkel relativ zu einer Senkrechten auf eine Tangentialebene der Werkstückoberfläche verstanden werden, insbesondere auf eine Tangentialebene im Auftreffpunkt oder im Auftreffbereich des Bearbeitungslaserstrahls auf die Werkstückoberfläche. Der Erfassungswinkel zur Prozesszone kann in Ausführungsformen des Verfahrens und/oder der Vorrichtung und in Abwandlungen davon zusammen mit einem Winkel relativ zu der Schneidrichtung, insbesondere mit einem Azimutwinkel zu der Schneidrichtung, definiert sein. In Ausführungsformen des Verfahrens und/oder der Vorrichtung und in Abwandlungen davon, in denen die Senkrechte auf die Werkstückoberfläche mit einer, insbesondere zentralen, optischen Achse des Bearbeitungslaserstrahls zusammen fällt, kann der Erfassungswinkel relativ zu der optischen Achse des Bearbeitungslaserstrahls definiert sein.

In allen oder einigen Ausführungsformen und Abwandlungen davon kann der Erfassungswinkel ein Winkel in einem Bereich von 0° bis 20°, bevorzugt von 0° bis 15°, mehr bevorzugt von 0° oder von 0,5° bis 10°, weiter bevorzugt 5° bis 20°, sein. Der Erfassungswinkel kann abhängig von der Lichtstrahloptik und/oder von der Optik der Bilderfassungseinrichtung und/oder von der Art des Laserscheidens ausgewählt und/oder bereitgestellt werden. Es können kleinere Erfassungswinkel, z.B. im Bereich von 0° bis 5° für ein als Schmelzschneiden mit beispielsweise N₂ als ein Schneidgas ausgeführtes Laserschneiden ausgewählt und/oder bereitgestellt werden. Größere Erfassungswinkel, z.B. im Bereich von 10° bis 20°, können für ein als Brennschneiden mit beispielsweise O₂ als ein Schneidgas ausgeführtes Laserschneiden ausgewählt und/oder bereitgestellt werden. Der Grund hierfür ist die Neigung der Schnittfront relativ zu der Senkrechten auf die Werkstückoberfläche, wobei die Neigung der Schnittfront bei einem Brennschneiden flacher ist als bei einem Schmelzschneiden.

In dem Verfahren können zur Ermittlung des Schnittqualitätsmerkmals Teilbilder mit einem gleichen Erfassungswinkel, einer gleichen Brennweite und/oder einer gleichen Polarisation aus der Schar von Teilbildern T₁ bis Tₘ mindestens eines der 1 bis n Bilder ausgewählt werden. Beispielsweise können zur Ermittlung eines zeitlich sich entwickelnden Schnittqualitätsmerkmals zeitlich nacheinander erfasste Teilbilder mit einem gleichen Erfassungswinkel und/oder einer gleichen Brennweite ausgewählt werden. Auf diese Weise können der zeitliche Verlauf des Laserschneidens und/oder die über einen Zeitraum sich entwickelnde Qualität des Laserschneidens erfasst und überwacht werden, z.B. eine Riefenfrequenz.

Ferner kann das Schnittqualitätsmerkmal aus der Schar von Teilbildern T₁ bis Tₘ aus mindestens einem der 1 bis n Bilder mit mindestens einem neuronalen Netzwerk ermittelt, z.B. geschätzt, werden. Beispielsweise kann das neuronale Netzwerk mindestens ein räumliches Schnittqualitätsmerkmal, z.B. Riefen der Schnittkante, und/oder mindestens ein zeitlich sich entwickelndes Schnittqualitätsmerkmal erlernen, z.B. eine Riefenfrequenz. Das neuronale Netzwerk kann selbständig mindestens ein geeignetes optisches Merkmal, Bildmerkmal und/oder Teilbildmerkmal für die Ermittlung eines bestimmten Schnittqualitätsmerkmals suchen und auswählen. Es kann auch selbständig ein oder mehrere geeignete optische Merkmale, Bildmerkmale und/oder Teilbildmerkmale für die Schneidqualitätsabschätzung und/oder für die Schneidregelung suchen und auswählen. Aufgrund des Einsatzes des neuronalen Netzwerks ist für die Ermittlung des Schnittqualitätsmerkmals und/oder für die Schneidregelung keine anspruchsvolle Spezialsoftware erforderlich. Es ist ferner nicht nötig, aus den 1 bin n Bildern eine dreidimensionale Geometrie der Prozesszone zu rekonstruieren, vielmehr findet das neuronale Netzwerk die Information selbständig, die zur Ermittlung des Schnittqualitätsmerkmals und/oder zur Qualitätsschätzung dient. In den Bildern und/oder Teilbildern sind dreidimensionale Informationen enthalten. Letztere können mittels dem mindestens einen neuronalen Netzwerk in Bezug auf mindestens ein Schnittqualitätsmerkmal extrahiert und/oder verarbeitet werden. In einigen Ausführungsformen werden die dreidimensionalen Informationen nicht zu einer dreidimensionalen Geometrie der Prozesszone rekonstruiert. In anderen Ausführungsformen können die dreidimensionalen Informationen zusätzlich rekonstruiert werden, um eine dreidimensionale Geometrie der Prozesszone zu ermitteln und/oder darzustellen.

Mit Bildmerkmalen sind Merkmale in den Bildern gemeint, welche mit einem Schnittqualitätsmerkmal und/oder dessen Ausprägung korrelieren. Mit Teilbildmerkmalen sind Merkmale in den Teilbildern gemeint, welche mit einem Schnittqualitätsmerkmal und/oder dessen Ausprägung korrelieren. Ein derartiges Merkmal kann beispielsweise eine Abkühlspur der unteren Schnittkante direkt hinter der Prozesszone sein, die sich als langgezogener Bereich mittlerer Ausprägung auf beiden Seiten des Schnittspalts zeigt. Die Länge dieser beiden Abkühlbereiche korreliert mit der Bildung von Grat. Insbesondere ist dieses Bildmerkmal oder Teilbildmerkmal je nach Neigung der Schnittkante unter einem leicht schrägen Erfassungswinkel und senkrecht zur Schneidrichtung erfassbar. Das neuronale Netzwerk findet selbständig die Bilder und/oder Teilbilder mit z.B. den geeignetsten Erfassungswinkeln, also das mindestens eine optische Merkmal und/oder das mindestens eine Bildmerkmal und/oder das mindestens eine Teilbildmerkmal, durch welche die Bildung von Grat am besten geschätzt werden kann.

Das Ermitteln des Schnittqualitätsmerkmals kann ein Zugreifen auf zumindest ein trainiertes neuronales Netzwerk mit mindestens einem der optischen Merkmale, Bildmerkmale und/oder Teilbildmerkmale beinhalten, um ein Ergebnis zur Ermittlung und/oder Schätzung des betreffenden Schnittqualitätsmerkmals zu berechnen. Während des Trainings des neuronalen Netzwerks können automatisch diejenigen optischen Merkmale, Bildmerkmale und/oder Teilbildmerkmale bestimmt werden, die für die Berechnung des Ergebnisses zu berücksichtigen sind. Das neuronale Netzwerk kann auf die Teilbilder eines oder mehrerer Bilder trainiert sein. Das neuronale Netzwerk kann vor der produktiven Qualitätsüberwachung mit Trainingsdaten trainiert werden. Dabei können dem neuronalen Netzwerk viele Bilder mit bekannten Schnittqualitätsmerkmalen präsentiert werden, damit es lernt, welche optischen Merkmale, Bildmerkmale und/oder Teilbildmerkmale relevant sind, um die gesuchten Schnittqualitätsmerkmale optimal schätzen zu können. Pro Schnittqualitätsmerkmal kann ein eigenes neuronales Netzwerk erzeugt werden. Es kann von einem Anwender des Verfahrens entschieden werden, welche Schnittqualitätsmerkmale überwacht werden sollen und/oder auf welche Schnittqualitätsmerkmale Prozessparameter des Verfahrens geregelt werden sollen. Die Schneidqualitätsabschätzung und/oder Schneidregelung kann somit parametrierbar sein, Dabei kann mindestens ein Schnittqualitätsmerkmal und oder eine Mischung aus verschiedenen Schnittqualitätsmerkmalen ausgewählt werden..

Das mindestens eine neuronale Netzwerk kann ein rechnerimplementiertes und maschinelles neuronales Netzwerk, z.B. ein deep neural network (DNN) und/oder ein convolutional neural networks (CNN) sein oder beinhalten. Mit dem mindestens einen neuronalen Netzwerk kann unter Einsatz künstlicher Intelligenz und/oder mit maschinellem Lernen mindestens ein Schnittqualitätsmerkmal ermittelt und die Schneidqualität und/oder die Schneidregelung optimiert werden. Die Vorteile des in Ausführungsformen eingesetzten neuronalen Netzwerks, insbesondere des DNN (Deep Neural Network), liegen darin, aus einem hochdimensionalen Input ohne Feature Engineering in einem End-to-End-Ansatz die für ein Schnittqualitätsmerkmal relevanten Signalquellen zu identifizieren, indem vorliegend ein optisches Merkmal und/oder die am meisten informative Ausprägung desselben selektiert wird, und/oder die in den Bildern und/oder Teilbildern vorhandenen Bildmerkmale zu identifizieren, die für das Schnittqualitätsmerkmal relevant sind. Dieser Selektionsprozess geschieht während des Trainings des neuronalen Netzwerks, insbesondere des DNN, automatisch und wird durch die Gewichtsmatrix und/oder die Parameter des Netzwerks nach dem Training repräsentiert.

Eine Ausführungsform betrifft eine Vorrichtung zum Laserschneiden eines Werkstücks, insbesondere mit einem Verfahren zum Laserschneiden eines Werkstücks nach einer der vorstehenden Ausführungsformen und Abwandlungen davon, insbesondere zum Erzeugen eines Schnittspalts, mit einem Schneidkopf. Der Schneidkopf weist eine erste Schnittstelle für eine Laserquelle zum Erzeugen eines Bearbeitungslaserstrahls und eine Austrittsöffnung für den Bearbeitungslaserstrahl auf. Die Vorrichtung zum Laserschneiden eines Werkstücks weist ferner auf: eine Bilderfassungseinrichtung zum Erfassen von 1 bis n Bildern der Prozesszone, insbesondere des Schnittspalts, in wenigstens einem Teil eines Beleuchtungslichts, das von der Prozesszone durch die Austrittsöffnung reflektiert wird, und/oder in wenigstens einem Teil eines Prozesslichts, das durch eine Wechselwirkung des Bearbeitungslaserstrahls mit dem Werkstück erzeugt wird und von der Prozesszone durch die Austrittsöffnung emittiert wird; und eine Lichtstrahloptik, die zumindest teilweise im Schneidkopf vorgesehen ist und eine Einrichtung zum Leiten des Bearbeitungslaserstrahls in Richtung der Austrittsöffnung und zum Leiten wenigstens eines Teils des durch die Austrittöffnung reflektierten Beleuchtungslichts und/oder wenigstens eines Teils des durch die Austrittsöffnung emittierten Prozesslichts zur Bilderfassungseinrichtung aufweist. Die Bilderfassungseinrichtung ist zum Erfassen jedes der 1 bis n Bilder als eine Schar von zeitgleichen Teilbildern T₁ bis Tₘ ausgebildet, wobei jedes oder eine Mehrzahl der Teilbilder T₁ bis Tₘ der Schar sich unterscheidet durch wenigstens ein optisches Merkmal ausgewählt aus einem a. Erfassungswinkel zur Prozesszone, b. einer Brennweite einer Optik der Bilderfassungseinrichtung in Richtung der Prozesszone, und c. einer Polarisation, insbesondere Polarisationswinkel und/oder Polarisationsgrad, des erfassten Prozesslichts und/oder des erfassten Beleuchtungslichts. Es ist eine Ermittlungseinheit zum Ermitteln mindestens eines Schnittqualitätsmerkmals aus der Schar von Teilbildern T₁ bis Tₘ mindestens eines der 1 bis n Bilder vorgesehen. Die Ermittlungseinheit oder eine Steuereinrichtung der Vorrichtung zum Laserschneiden, die die Ermittlungseinheit enthält, kann mit der Bilderfassungseinrichtung datenleitend verbunden sein.

Der Schneidkopf kann eine zweite Schnittstelle für eine Beleuchtungslichtquelle zum Erzeugen eines Beleuchtungslichtstrahls des Beleuchtungslichts, insbesondere eines Beleuchtungslaserstrahls, aufweisen. Die Lichtstrahloptik kann eine Einrichtung zum Leiten des Beleuchtungslichtstrahls in Richtung der Austrittsöffnung aufweisen. Der Beleuchtungslichtstrahl kann eine Wellenlänge im Bereich von 350 bis 1500 nm und/oder eine Leistung von 50 mW bis 10 W besitzen.

Die Bilderfassungseinrichtung kann mindestens einen Strahlungsintensitätssensor zum Erfassen der 1 bis n Bilder aufweisen, dem mindestens ein optisches Mittel vorgeschaltet oder vorschaltbar ist, ausgewählt aus
- einer Schar von nebeneinander angeordneten Mikrolinsen zur Erfassung des reflektierten Beleuchtungslichts und/oder des Prozesslichts aus mehreren einzelnen Erfassungswinkeln und/oder mit mehreren einzelnen Brennweiten;
- einer Schar von Spiegeln zur Erfassung des reflektierten Beleuchtungslichts und/oder des Prozesslichts aus mehreren einzelnen Erfassungswinkeln unter kaleidoskopischer Mehrfachreflexion; und
- einer Schar von nebeneinander angeordneten Mikropolarisationsfiltern zur Erfassung des reflektierten Beleuchtungslichts und/oder des Prozesslichts mit mehreren einzelnen Polarisationen.

Der Strahlungsintensitätssensor kann flächig ausgebildet sein. In der Schar von nebeneinander angeordneten Mikrolinsen können die Mikrolinsen flächig nebeneinander angeordnet sein. In der Schar von nebeneinander angeordneten Mikropolarisationsfiltern können die Mikropolarisationsfilter flächig nebeneinander angeordnet sein. Die Schar von nebeneinander angeordneten Mikrolinsen kann gleiche und/oder unterschiedliche Mikrolinsen enthalten.

Die Bilderfassungseinrichtung kann mindestens eine Schar von nebeneinander angeordneten Mikrolinsen und/oder mindestens eine Schar von nebeneinander angeordneten Mikropolarisationsfiltern enthalten, die jeweils dem Strahlungsintensitätssensor vorschaltbar sind. Die Schar von nebeneinander angeordneten Mikrolinsen, die Schar von Spiegeln zur Erfassung unter kaleidoskopischer Mehrfachreflexion und/oder die Schar von nebeneinander angeordneten Mikropolarisationsfiltern können dem Strahlungsintensitätssensor räumlich hintereinander vorgeschaltet und/oder vorschaltbar sein. Ferner kann die Schar von nebeneinander angeordneten Mikrolinsen, die Schar von Spiegeln zur Erfassung unter kaleidoskopischer Mehrfachreflexion und/oder die Schar von nebeneinander angeordneten Mikropolarisationsfiltern dem Strahlungsintensitätssensor zeitlich abwechselnd vorschaltbar sein. Beispielsweise kann die Schar von nebeneinander angeordneten Mikrolinsen, die Schar von Spiegeln zur Erfassung unter kaleidoskopischer Mehrfachreflexion und/oder die Schar von nebeneinander angeordneten Mikropolarisationsfiltern jeweils derart auf einer, z.B. mit einem Aktuator, beweglichen Halterung, die in der Bilderfassungseinrichtung vorgesehen ist, angeordnet sein, dass sie unabhängig voneinander einzeln vor den Strahlungsintensitätssensor bewegbar sind. Beispielsweise kann die Halterung verschwenkbar sein. Alternativ können die Mikrolinsen und Mikropolarisationsfilter auf einer rotationsbeweglichen Halterung angeordnet sein. Durch Rotation der rotationsbeweglichen Halterung mit den Mikrolinsen und Mikropolarisationsfiltern wird die zeitliche Hintereinanderschaltung bewirkt.

Der mindestens eine Strahlungsintensitätssensor kann temperaturkalibriert sein und eine Bestimmungseinheit zur Bestimmung der Strahlungstemperatur des Prozesslichts kann vorgesehen sein. Des Weiteren kann die Ermittlungseinheit ausgebildet sein, das mindestens eine Schnittqualitätsmerkmal basierend auf mindestens einem Element ausgewählt aus einer Geometrie der Prozesszone, insbesondere einer Geometrie des Schnittspalts, einer Temperaturverteilung über und/oder in der Prozesszone, insbesondere über und/oder in dem Schnittspalt, einer Geschwindigkeitsverteilung eines Schmelzbades in der Prozesszone, insbesondere in dem Schnittspalt und/oder entlang des Schnittspalts, und mindestens einem Differenzbild der Geometrie der Prozesszone, insbesondere mindestens einem Differenzbild der Geometrie des Schnittspalts, als eine in der Schar der Teilbilder von zumindest einem der 1 bis n Bilder enthaltene 3D-Information zu ermitteln. Die Bilderfassungseinrichtung kann mindestens ein Element ausgewählt aus einer Kamera, die das reflektierte Beleuchtungslicht und/oder das Prozesslicht aus mehreren einzelnen Erfassungswinkeln und/oder mit mehreren einzelnen Brennweiten erfasst, und einer Polarisationskamera aufweisen.

An der ersten Schnittstelle kann eine Laserquelle zum Erzeugen eines Bearbeitungslaserstrahls mit einer Leistung von mindestens 1 kW, bevorzugt mindestens 6kW vorgesehen sein. Der Bearbeitungslaserstrahl kann eine Wellenlänge im Bereich von 700 nm bis 2 µm und/oder eine Leistung von 1 bis 100 kW besitzen. Der Schneidkopf kann mit mindestens einer weiteren Schnittstelle versehen sein. An der zweiten Schnittstelle und/oder an der mindestens einen weiteren Schnittstelle des Schneidkopfs kann mindestens ein Element ausgewählt aus einem Teil der Lichtstrahloptik, einer Beleuchtungslichtquelle zum Erzeugen des Beleuchtungslichtstrahls, insbesondere eines Beleuchtungslaserstrahls, und der Bilderfassungseinrichtung angebunden sein. Die Lichtstrahloptik kann zum koaxialen Leiten des Bearbeitungslaserstrahls und des Beleuchtungslichtstrahls auf die Prozesszone, insbesondere in einem Winkel von im Wesentlichen 90° zur Werkstückoberfläche, ausgebildet sein. Die Lichtstrahloptik kann ferner ausgebildet sein, mindestens einen Teil des von der Prozesszone durch die Austrittsöffnung reflektierten Beleuchtungslichts und/oder mindestens einen Teil des von der Prozesszone durch die Austrittöffnung emittierten Prozesslichts, der jeweils koaxial zum auf die Prozesszone auftreffenden Bearbeitungslaserstrahl verläuft, zur Bilderfassungseinrichtung zu leiten.

Die Ermittlungseinheit kann ausgebildet sein, Teilbilder mit einem Erfassungswinkel in einem Bereich von 0° bis 20°, bevorzugt zwischen 0° und 15°, zur Prozesszone auszuwählen. Die Schar von Mikrolinsen und/oder die Schar von Spiegeln kann ausgebildet sein, eine Mehrzahl von Erfassungswinkeln in einem Bereich von 0° bis 20°, bevorzugt zwischen 0° und 15°, zur Prozesszone bereitzustellen. Die Ermittlungseinheit kann ausgebildet sein, Teilbilder mit einem gleichen Erfassungswinkel, einer gleichen Brennweite und/oder einer gleichen Polarisation aus der Schar von Teilbildern T₁ bis Tₘ mindestens eines der 1 bis n Bilder zur Ermittlung des Schnittqualitätsmerkmals auszuwählen. Beispielsweise kann die Ermittlungseinheit ausgebildet sein, zur Ermittlung eines zeitlich sich entwickelnden Schnittqualitätsmerkmals zeitlich nacheinander erfasste Teilbilder mit einem gleichen Erfassungswinkel und/oder einer gleichen Brennweite auszuwählen.

Die Ermittlungseinheit kann mindestens ein neuronales Netzwerk zur Ermittlung des Schnittqualitätsmerkmals aus der Schar von Teilbildern T₁ bis Tₘ aus mindestens einem der 1 bis n Bilder aufweisen. Z. B. kann das neuronale Netzwerk zum Schätzen des Schnittqualitätsmerkmals ausgebildet sein. Das mindestens eine neuronale Netzwerk kann ein rechnerimplementiertes und maschinelles neuronales Netzwerk, z.B. ein deep neural network (DNN) und/oder ein convolutional neural networks (CNN) sein oder beinhalten. Das neuronale Netzwerk kann ausgebildet sein, die vorstehend zum Verfahren beschriebenen Komponenten, Eigenschaften und/oder Funktionen des neuronalen Netzwerks zu besitzen und/oder zu realisieren.

Beispielsweise kann das neuronale Netzwerk ausgebildet sein, mindestens ein räumliches Schnittqualitätsmerkmal, z.B. Riefen der Schnittkante, und/oder mindestens ein zeitlich sich entwickelndes Schnittqualitätsmerkmal zu erlernen, z.B. eine Riefenfrequenz. Das neuronale Netzwerk kann ausgebildet sein, selbständig mindestens ein geeignetes optisches Merkmal, Bildmerkmal und/oder Teilbildmerkmal für die Ermittlung eines bestimmten Schnittqualitätsmerkmals zu suchen und auszuwählen. Es kann ausgebildet sein, selbständig mindestens ein geeignetes optisches Merkmal, Bildmerkmal und/oder Teilbildmerkmal für die Schneidqualitätsabschätzung und/oder für die Schneidregelung zu suchen und auszuwählen. Aufgrund des Einsatzes des neuronalen Netzwerks ist für die Ermittlung des Schnittqualitätsmerkmals und/oder für die Schneidregelung keine anspruchsvolle Spezialsoftware erforderlich. Es ist ferner nicht nötig, aus den 1 bin n Bildern eine dreidimensionale Geometrie der Prozesszone zu rekonstruieren. Das neuronale Netzwerk kann ausgebildet sein, aus den Bildern und/oder Teilbildern die Information selbständig zu suchen, die zur Ermittlung des Schnittqualitätsmerkmals und/oder zur Qualitätsschätzung und/oder zur Schneidregelung dient.

Das neuronale Netzwerk kann trainierbar und/oder trainiert sein. Die Ermittlungseinheit kann ausgebildet sein, ein Zugreifen auf das trainierte neuronale Netzwerk mit mindestens einem der optischen Merkmale, Bildmerkmale und/oder Teilbildmerkmale zu veranlassen, um ein Ergebnis zur Ermittlung und/oder Schätzung des betreffenden Schnittqualitätsmerkmals zu berechnen. Die Ermittlungseinheit kann ausgebildet sein, ein Training des neuronalen Netzwerks zu veranlassen. Das neuronale Netzwerk kann ausgebildet sein, während seines Trainings automatisch diejenigen optischen Merkmale, Bildmerkmale und/oder Teilbildmerkmale zu bestimmen, die für die Berechnung des Ergebnisses zu berücksichtigen sind. Mit dem neuronalen Netzwerk kann unter Einsatz künstlicher Intelligenz und/oder mit maschinellem Lernen mindestens ein Schnittqualitätsmerkmal ermittelt und die Schneidqualität und/oder die Schneidregelung optimiert werden.

Die Vorrichtung zum Laserschneiden eines Werkstücks kann eine Steuereinrichtung aufweisen, die die Ermittlungseinheit und/oder die Bestimmungseinheit, insbesondere jeweils als Programmodul, beinhaltet. Die Steuereinrichtung und/oder die Ermittlungseinheit kann als Computer ausgebildet sein oder einen solchen beinhalten. Die Steuereinrichtung und/oder die Ermittlungseinheit kann zumindest mit dem Schneidkopf, der Bilderfassungseinrichtung und/oder der Lichtstrahloptik drahtgebunden datenleitend verbunden sein, z.B. mit deren Aktuatoren, Lichtquellen, Laserquellen und Sensoren. Die Datenleitung kann auch via Lichtleiter oder drahtlos, z.B. per Funk erfolgen.

Eine Ausführungsform betrifft ferner eine Verwendung der Vorrichtung zum Laserschneiden eines Werkstücks gemäß der vorstehenden Ausführungsformen und Abwandlungen zum Laserschneiden eines Werkstücks.

Eine Ausführungsform betrifft ein Computerprogrammprodukt, umfassend ein oder mehrere Programmmodule, die bewirken, dass die Vorrichtung nach einer der vorstehenden Ausführungsformen und Abwandlungen davon Schritte des Verfahrens nach einer der vorstehenden Ausführungsformen und Abwandlungen davon ausführt, insbesondere wenn die Programmmodule in einen Speicher der Vorrichtung geladen werden. Die Ermittlungseinheit und/oder die Bestimmungseinheit der vorstehenden Ausführungsformen und Abwandlungen davon können jeweils als Programmodul ausgebildet sein.

Die Ausführungsformen und Abwandlungen der Vorrichtung zum Laserschneiden eines Werkstücks können in den Ausführungsformen und Abwandlungen des Verfahrens zum Laserschneiden eines Werkstücks genutzt werden. Mit den vorstehenden Ausführungsformen der Vorrichtung zum Laserschneiden eines Werkstücks können die gleichen Vorteile und Funktionen realisiert werden, wie mit den Ausführungsformen des Verfahrens zum Laserschneiden eines Werkstücks, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1a bis 1d: schematisch ein Ausführungsbeispiel einer Vorrichtung 100 zum Laserschneiden;
- Fig. 1e: schematisch ein Ausführungsbeispiel eines Verfahrens zum Laserschneiden;
- Fig. 1f und 1g: schematisch eine Abwandlung der Vorrichtung 100 zum Laserschneiden;
- Fig. 2: schematisch ein Ausführungsbeispiel einer Vorrichtung 300 zum Laserschneiden;
- Fig. 3a bis 3f: schematisch ein Ausführungsbeispiel einer Vorrichtung 400 zum Laserschneiden; und
- Fig. 4a bis 4d: schematisch ein Ausführungsbeispiel einer Vorrichtung 500 zum Laserschneiden.

Die Begriffe "Vorrichtung zum Laserschneiden eines Werkstücks" und "Vorrichtung zum Laserschneiden" werden vorliegend synonym verwendet. In Ausführungsformen und Beispielen kann der Begriff "Bild" verstanden werden als eine Schar zeitgleicher Teilbilder, ein Bilderfassungsdatenfeld, ein Sensordatenfeld und/oder ein Pixeldatenfeld. Der Begriff "Erfassungswinkel zur Prozesszone" kann in einigen Ausführungsformen und Beispielen, wie oben erläutert, als ein Winkel relativ zu einer Senkrechten auf die Werkstückoberfläche verstanden werden. In einigen Ausführungsbeispielen kann der Erfassungswinkel einem Winkel relativ zu einer optischen Achse eines auf die Prozesszone gerichteten Bearbeitungslaserstrahls entsprechen. Der Erfassungswinkel zur Prozesszone kann in Ausführungsformen zusammen mit einem Winkel relativ zu einer Schneidrichtung, z.B. mit einem Azimutwinkel zu der Schneidrichtung, definiert werden.

Ein mit den folgenden Ausführungsbeispielen durch Laserschneiden erzeugter Schnittspalt besitzt eine Schnittfront und mindestens eine Schnittkante. In Ausführungsformen kann die Laserquelle zum Erzeugen eines Bearbeitungslaserstrahls derart ausgebildet sein, dass ein kontinuierlicher und/oder diskontinuierlicher, insbesondere gepulster, Bearbeitungslaserstrahl bereitgestellt wird. In Ausführungsformen wird das Verfahren zum Laserschneiden mit einer Steuereinrichtung gesteuert. In Ausführungsformen beinhaltet die Vorrichtung zum Laserschneiden eine Steuereinrichtung, mit der die Vorrichtung zum Laserschneiden und deren ansteuerbare Komponenten gesteuert und/oder geregelt werden. In dem Verfahren zum Laserschneiden kann der Schneidkopf und/oder der Bearbeitungslaserstrahl in Schneidrichtung über das Werkstück bewegt werden. Die Vorrichtung zum Laserschneiden kann eine Schneidkopfbewegungseinheit beinhalten, mit der der Schneidkopf und/oder der Bearbeitungslaserstrahl in Schneidrichtung über das Werkstück bewegt werden kann.

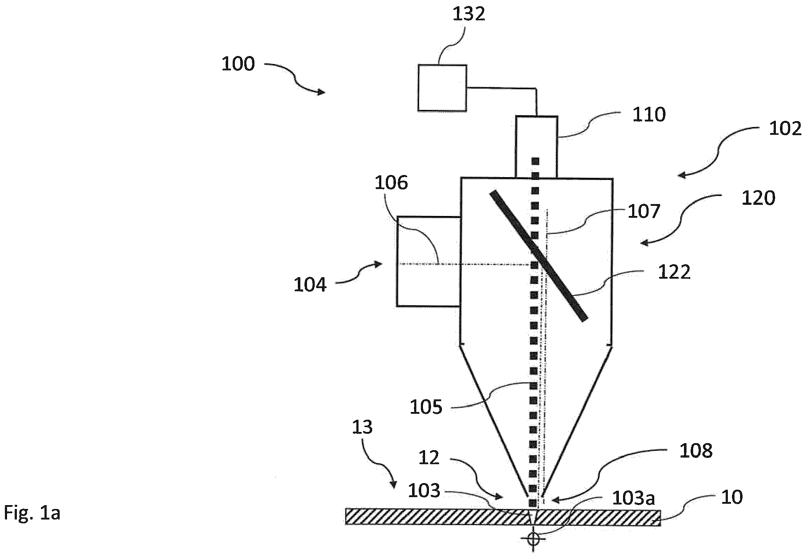

Ein Ausführungsbeispiel einer Vorrichtung 100 zum Laserschneiden eines Werkstücks 10 mit einer ebenen Werkstückoberfläche 13 ist in Fig. 1a schematisch dargestellt. Die Vorrichtung 100 besitzt einen Schneidkopf 102. Der Schneidkopf 102 weist eine erste Schnittstelle 104 für eine Laserquelle (nicht gezeigt) zum Erzeugen eines Bearbeitungslaserstrahls 106 und eine Austrittsöffnung 108 für den Bearbeitungslaserstrahl auf. Beispielsweise kann die Laserquelle mit einer Transportfaser für den Bearbeitungslaserstrahl an der ersten Schnittstelle 104 angekoppelt werden. Die Laserquelle erzeugt einen Bearbeitungslaserstrahl 106 mit einer Leistung von 1 kW und einer Wellenlänge im Bereich von 700 nm bis 2 µm. Durch eine Wechselwirkung des Bearbeitungslaserstrahls 106 mit dem Werkstück 10, das beispielsweise aus Edelstahl ist, in einer Prozesszone 12 des Werkstücks wird ein Prozesslicht 105 erzeugt und von der Prozesszone 12 durch die Austrittsöffnung 108 in den Schneidkopf 102 emittiert.

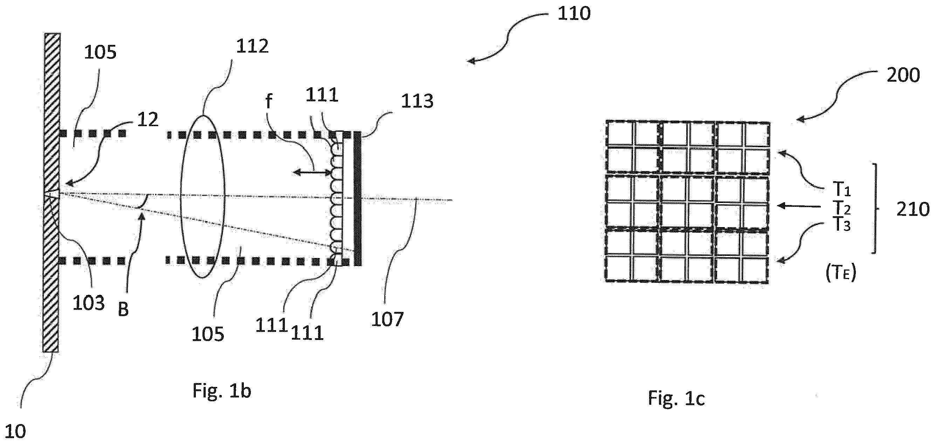

Die Vorrichtung 100 zum Laserschneiden weist ferner eine Bilderfassungseinrichtung 110, z.B. eine Kamera, zum Erfassen von 1 bis n Bildern 200 der Prozesszone 12 des Werkstücks 10 auf. Ein Beispiel eines Bildes 200 ist in Fig. 1c dargestellt. Es ist eine Lichtstrahloptik 120 im Schneidkopf 102 vorgesehen, die im vorliegenden Beispiel einen dichroitischen Spiegel 122 als eine Einrichtung zum Leiten des Bearbeitungslaserstrahls 106 auf einer optischen Achse in Richtung der Austrittsöffnung 108 und zum Leiten wenigstens eines Teils des durch die Austrittsöffnung emittierten Prozesslichts 105 zur Bilderfassungseinrichtung 110 aufweist. Im vorliegenden Beispiel stimmt eine Senkrechte 107 auf die ebene Werkstückoberfläche 13, bzw. auf die in der Werkstückoberfläche 12 liegende der Prozesszone 12, mit der zentralen optischen Achse des Bearbeitungslaserstrahls überein. Die Bilderfassungseinrichtung 110 und die Lichtstrahloptik 120 sind im vorliegenden Beispiel derart ausgebildet, dass die Bilder 200 der Prozesszone 12 koaxial zum Bearbeitungslaserstrahl 106 aufgenommen werden.

Die Bilderfassungseinrichtung 110 ist zum Erfassen jedes der 1 bis n Bilder 200 als eine Schar 210 von zeitgleichen Teilbildern T₁ bis Tₘ, auch T_{E} genannt, ausgebildet, wie in Fig. 1c ausschnittweise mit den Teilbildern T₁ bis T₃ veranschaulicht, wobei jedes der Teilbilder T₁ bis Tₘ der Schar 210 sich unterscheidet durch einen Erfassungswinkel B zur Prozesszone 12. Wie in Fig. 1b schematisch dargestellt, enthält die Bilderfassungseinrichtung 110 eine Linse 112, eine Schar von flächig nebeneinander angeordneten Mikrolinsen 111 und einen flächigen Strahlungsintensitätssensor 113, z.B. einen CMOS-Chip (oder Vergleichbares), vorliegend auch Sensor genannt. Mit der Linse 112 wird das von der Prozesszone 12 emittierte Prozesslicht 105, das in Fig. 1b nicht in seiner ganzen Länge, sondern unterbrochen dargestellt ist, auf den Sensor 113 gelenkt, im vorliegenden Beispiel kollimiert. Im vorliegenden Beispiel enthält die Schar von flächig nebeneinander angeordneten Mikrolinsen 111 eine Mehrzahl von Mikrolinsen, die eine Mehrzahl von Erfassungswinkeln B bereitstellt. In Fig. 1b ist der von einer der Mikrolinsen 111 bereitgestellte Erfassungswinkeln B relativ zur Senkrechten 107 auf die Werkstückoberfläche schematisch eingezeichnet. Das Prozesslicht 105 durchläuft die Schar von Mikrolinsen 111 und wird mit entsprechend unterschiedlichen Erfassungswinkeln B auf den Sensor 113 gerichtet. Dabei entsteht mindestens ein in Fig. 1c dargestelltes Bild 200 mit einer Schar 210 von Teilbildern. Jedes Teilbild T₁ bis Tₘ gibt einen Erfassungswinkel wieder. Im vorliegenden Beispiel entspricht ein Teilbild T₁ bis Tₘ jeweils einer Fläche des Sensors 113 von 2x2 Pixeln. Ein Teilbild T₁ bis Tₘ kann in anderen Beispielen einer größeren oder kleineren Fläche des Sensors 113 entsprechen mit mehr oder weniger Pixeln.

Die Mikrolinsen 111 stellen Erfassungswinkel B in einem Bereich von 0° bis 20° relativ zu der Senkrechten 107 auf die Werkstückoberfläche 13 bereit. Gemäß einer Abwandlung dieses Beispiels sind Mikrolinsen 111 vorgesehen, die Erfassungswinkel im Bereich von z.B. 0° bis 5° relativ zu der Senkrechten 107 auf die Werkstückoberfläche für ein Schmelzschneiden mit N₂ als ein Schneidgas bereitstellen. Gemäß einer weiteren Abwandlung dieses Beispiels sind Mikrolinsen 111 vorgesehen, die Erfassungswinkel z.B. im Bereich von 5° bis 20° oder 10° bis 20° relativ zu der Senkrechten 107 auf die Werkstückoberfläche für ein Brennschneiden mit beispielsweise O₂ als ein Schneidgas bereitstellen. Der Grund hierfür ist die Neigung der Schnittfront relativ zu der Senkrechten 107 auf die Werkstückoberfläche 13, welche bei einem Brennschneiden größer sein kann als bei einem Schmelzschneiden. Beispielsweise kann eine Abkühlspur und eine resultierende Gratbildung als Schnittqualitätsmerkmal unter einem Erfassungswinkel B von 0° bis 2° relativ zu der Senkrechten 107 auf die Werkstückoberfläche und unter einem Azimutwinkel von 90° zur Schneidrichtung 103a, d.h. senkrecht zur Schneidrichtung 103a, ermittelt werden. Dies betrifft z.B. ein Schmelzschneiden mit N₂. Beim Brennschneiden kann ein Schlackenrückstand im Schnittspalt 103 beispielsweise in Richtung der nach hinten geneigten Schneidfront unter einem Erfassungswinkel B von 7° bis 15° relativ zu der Senkrechten 107 auf die Werkstückoberfläche 13 und unter einem Azimutwinkel von 0° zur Schneidrichtung 103a, abhängig von Werkstückdicke und Werkstückmaterial, anhand eines verstärktes Glühens, also einer erhöhten Helligkeit im Schnittspalt ermittelt werden. Ferner kann beim Brennschneiden eine Rauheit im oberen Bereich der Schnittkante insbesondere unter einem Erfassungswinkel B von 5 bis 15° relativ zu der Senkrechten 107 auf die Werkstückoberfläche 13 und unter einem Azimutwinkel von 90° zur Schneidrichtung 103a, d.h. senkrecht zur Schneidrichtung 103a, erfasst werden. Der Azimutwinkel liegt im vorliegenden Beispiel in der Ebene der Werkstückoberfläche 13.

Die Vorrichtung 100 zum Laserschneiden enthält eine Ermittlungseinheit 132. In dem vorliegenden Ausführungsbeispiel ist die Ermittlungseinheit 132 mit der Bilderfassungseinrichtung 110 datenleitend verbunden. Mit der Ermittlungseinheit 132 wird aus der Schar 210 von Teilbildern T₁ bis Tₘ mindestens eines der Bilder 200 anhand des unterschiedlichen Erfassungswinkels als ein optisches Merkmal mindestens ein Schnittqualitätsmerkmal ermittelt. Als das Schnittqualitätsmerkmal wird beispielsweise das Vorhandensein von Riefen auf einer erzeugten Schnittkante des Schnittspalts ermittelt, d.h. ein räumliches Schnittqualitätsmerkmal. Im Verlauf des Laserschneidens wird eine Mehrzahl von Bildern 200 erhalten, mit denen die Entwicklung der Riefen beim Laserschneiden verfolgt und eine Riefenfrequenz als ein zeitlich sich entwickelndes Schnittqualitätsmerkmal ermittelt wird. Andere Beispiele für ein ermitteltes räumliches Schnittqualitätsmerkmal sind Grat an der Unterseite des geschnittenen Werkstücks, Grat gemessen als Grathöhe und/oder Gratvolumen an der Unterseite der Schnittkante, die Rauheit der Schnittkante, die Welligkeit der Schnittkante, Schlacke, Schlackenrückstand im Schnittspalt, Schlackenrückstand an der Unterseite der Schnittkante und Rechtwinkligkeit der Schnittkante zur Werkstückoberfläche. Beispiele für ein ermitteltes, zeitlich sich entwickelndes Schnittqualitätsmerkmal sind Plasmabildung, Abriss der Schnittkante, zeitlicher Verlauf von räumlichen und/oder örtlichen Schnittqualitätsmerkmalen, Varianz der räumlichen und/oder örtlichen Schnittqualitätsmerkmale als zeitlicher Verlauf. Es können auch mehrere Schnittqualitätsmerkmale ermittelt werden.

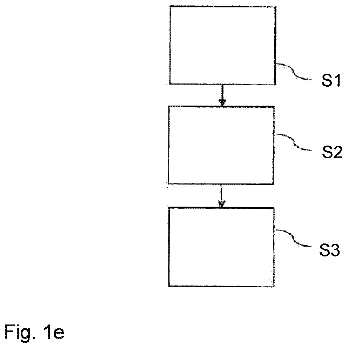

Im Betrieb der Vorrichtung 100 wird ein Verfahren zum Laserschneiden des Werkstücks 10 durchgeführt, wie in Fig. 1e veranschaulicht. Dabei werden Schritte S1 bis S3 ausgeführt: Der Schritt S1 beinhaltet ein Bestrahlen der Prozesszone 12 des Werkstücks mit dem Bearbeitungslaserstrahl 106, ein Schneiden des Werkstücks in einer Schneidrichtung 103a in einem Schritt S2 und ein Erzeugen des Schnittspalts 103. Die Schneidrichtung 103a ist in der Darstellung der Fig. 1a gemäß dem vorliegenden Beispiel eine Gerade senkrecht zur Zeichenebene und ist als ein Fadenkreuz veranschaulicht. Der Schritt S2 beinhaltet ein Erfassen von 1 bis n Bildern 200 der Prozesszone 12 in wenigstens einem Teil des Prozesslichts 105, das durch die Wechselwirkung des Bearbeitungslaserstrahls 106 mit dem Werkstück 10 erzeugt wird und von der Prozesszone 12 emittiert wird, mittels der Bilderfassungseinrichtung 110. Die 1 bis n Bilder werden zeitlich nacheinander erfasst, z.B. als ein digitaler Videostream. Im Schritt S2 wird jedes der 1 bis n Bilder 200 als Schar 210 von zeitgleichen Teilbildern T₁ bis Tₘ erfasst, wobei jedes der Teilbilder T₁ bis Tₘ der Schar 210 sich unterscheidet durch das optische Merkmal eines Erfassungswinkels zur Prozesszone 12. Das Vorhandensein von Riefen oder anderen Schnittqualitätsmerkmalen an der Schnittkante des Schnittspalts in der Prozesszone 12 wird aus der Schar 210 von Teilbildern T₁ bis Tₘ mindestens eines der 1 bis n Bilder 200 in dem Schritt S3 ermittelt.

In einer Abwandlung der Vorrichtung 100 enthält die Schar von flächig nebeneinander angeordneten Mikrolinsen 111 eine Mehrzahl von Mikrolinsen, wobei jede Mikrolinse 111 oder eine Mehrzahl der Mikrolinsen 111 sich unterscheidet in der Brennweite f in Richtung der Prozesszone 12. Das Prozesslicht 105 durchläuft die Schar von Mikrolinsen 111 und wird mit unterschiedlichen Brennweiten f auf den Sensor 113 gerichtet. Dabei entsteht ebenfalls mindestens ein Bild 200 mit einer Schar von zeitgleichen Teilbildern T₁ bis Tₘ, wie in Fig. 1c teilweise als 3x3 Teilbilder gezeigt. In dieser Abwandlung der Vorrichtung 100 stellt die Schar von flächig nebeneinander angeordneten Mikrolinsen 111 eine Mehrzahl unterschiedlicher Brennweiten f in Richtung der Prozesszone 12 und eine Mehrzahl unterschiedlicher Erfassungswinkel B bereit. Mit der Ermittlungseinheit 132 wird in dieser Abwandlung der Vorrichtung 100 aus der Schar von Teilbildern T₁ bis Tₘ mindestens eines der 1 bis n Bilder 200 anhand des unterschiedlichen Erfassungswinkels und/oder der unterschiedlichen Brennweiten als optische Merkmale mindestens ein räumliches Schnittqualitätsmerkmal und/oder mindestens ein zeitlich sich entwickelndes Schnittqualitätsmerkmal ermittelt.

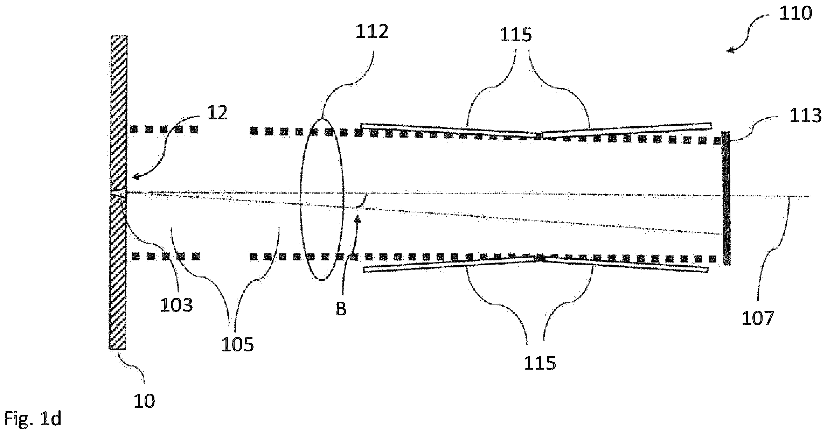

Eine Abwandlung der Vorrichtung 100 enthält in der Bilderfassungseinrichtung 110 statt der Schar von flächig nebeneinander angeordneten Mikrolinsen 111 eine Schar von Spiegeln 115 zur Erfassung des Prozesslichts 105 aus mehreren einzelnen Erfassungswinkeln unter kaleidoskopischer Mehrfachreflexion, wie in Fig. 1d gezeigt. Das von der Prozesszone 12 emittierte Prozesslicht 105 ist in Fig. 1d nicht in seiner ganzen Länge, sondern unterbrochen dargestellt. Auch im Betrieb dieser Abwandlung der Vorrichtung 100 wird mindestens ein Bild 200 mit einer Schar 210 von zeitgleichen Teilbildern T₁ bis Tₘ, wie in Fig. 1c veranschaulicht, erhalten. Dabei unterscheidet sich jedes der Teilbilder T₁ bis Tₘ der Schar 210 durch das optische Merkmal eines Erfassungswinkels B zur Prozesszone 12, die in und/oder parallel zu der Werkstückoberfläche 13 liegt. Mit der Ermittlungseinheit 132 wird aus der Schar von Teilbildern T₁ bis Tₘ mindestens eines der 1 bis n Bilder 200 anhand des unterschiedlichen Erfassungswinkels als optisches Merkmal mindestens ein räumliches Schnittqualitätsmerkmal und/oder mindestens ein zeitlich sich entwickelndes Schnittqualitätsmerkmal ermittelt.

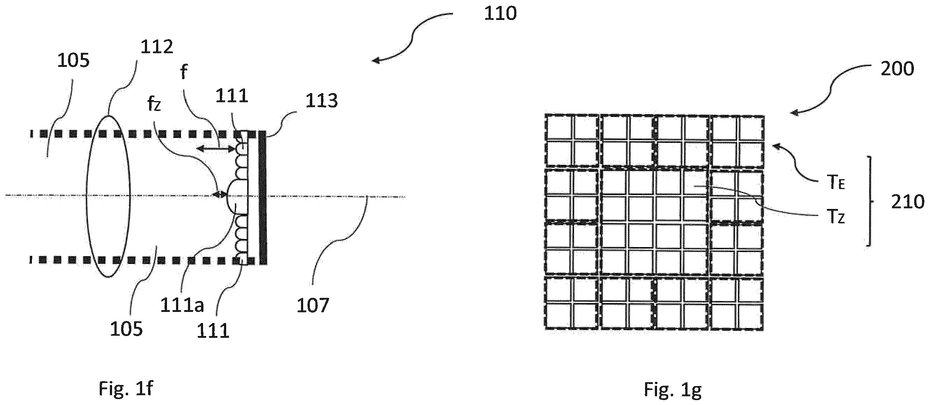

Eine Abwandlung der Vorrichtung 100 enthält in der Bilderfassungseinheit 110 im Zentrum der Schar der Mikrolinsen 111 eine größere Mikrolinse 111a, wie in Fig. 1f und 1g beispielhaft als Ausschnitt gezeigt. Die zentrale Mikrolinse 111a mit einer Brennweite fz, die sich im vorliegenden Beispiel von der Brennweite f der Mikrolinsen 111 unterscheidet, erzeugt ein größeres Teilbild Tz, das 4x4 Pixel umfasst, im Zentrum des Bildes bei einem Erfassungswinkel B von 0° zur Senkrechten 107 auf die Werkstückoberfläche, wobei die Senkrechte 107 vorliegend mit der optischen Achse des Bearbeitungslaserstrahls 106 übereinstimmt, in der Schar von Teilbildern T_{E}. Dadurch kann die Auflösung des zentralen Bildes, das mit der optischen Achse koaxial ist, erhöht werden. Dies ist insbesondere dann von Vorteil, wenn Erfassungswinkel nahe 0° relativ zu der optischen Achse weniger Informationsgewinn bringen, eine höhere Auflösung des Zentrumsbildes für reine koaxiale Beobachtung erzielt werden soll und/oder im Randbereich eher die Information der Strahlungsintensität in Abhängigkeit des Strahlungswinkels interessiert.

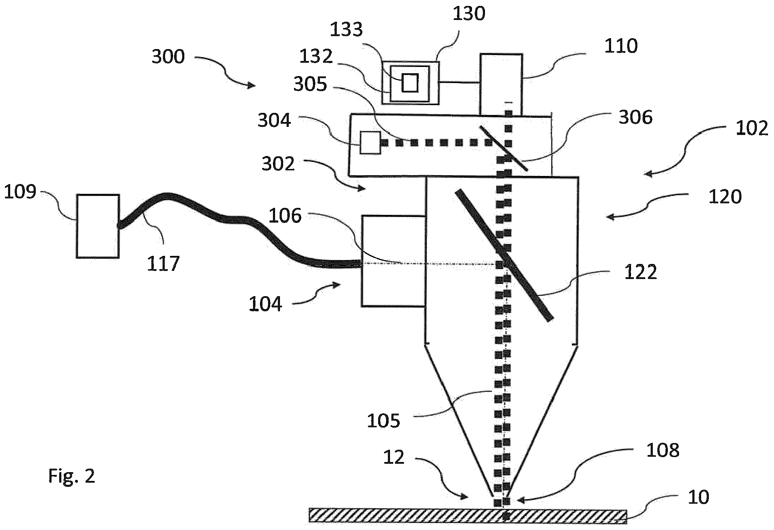

Ein weiteres Ausführungsbeispiel betrifft eine Vorrichtung 300, die in Fig. 2 dargestellt ist. Die Vorrichtung 300 enthält im Vergleich zur Vorrichtung 100 eine zweite Schnittstelle 302 für eine Beleuchtungslichtquelle 304 zum Erzeugen eines Beleuchtungslichtstrahls 305 eines Beleuchtungslichts. An der ersten Schnittstelle 104 ist eine Laserquelle 109, die den Bearbeitungslaserstrahl 106 erzeugt, über eine Transportfaser 117 angekoppelt. Der Beleuchtungslichtstrahl 305 wird von der Prozesszone 12 und der benachbarten Werkstückoberfläche reflektiert. Die Lichtstrahloptik 120 enthält einen dichroitischen Spiegel 306 als eine Einrichtung zum Leiten des Beleuchtungslichtstrahls 305 in Richtung der Austrittsöffnung 108, und zum Leiten des reflektierten Beleuchtungslichtstrahls 305 zur Bilderfassungseinrichtung 110. Der dichroitische Spiegel 306 ist für den reflektierten Beleuchtungslichtstrahl 305 transparent. Der Beleuchtungslichtstrahl 305 hat eine Wellenlänge von 750 nm und wird von der Beleuchtungslichtquelle 304 mit einer Leistung von 500 mW erzeugt.

In diesem Ausführungsbeispiel ist die Ermittlungseinheit 132 Teil einer bereits oben erwähnten Steuereinrichtung 130 der Vorrichtung 300. Die Steuereinrichtung 130 ist zumindest mit dem Schneidkopf 102, der Bilderfassungseinrichtung 110 und/oder der Lichtstrahloptik 120 datenleitend verbunden. Die Vorrichtung 100 zum Laserschneiden kann analog abgewandelt sein. Die Ermittlungseinheit 132 enthält in diesem Beispiel ein neuronales Netzwerk 133 zur Ermittlung des Schnittqualitätsmerkmals aus der Schar von Teilbildern T₁ bis Tₘ, wie oben erläutert. Das neuronale Netzwerk 133 sucht selbständig mindestens ein optisches Merkmal, sowie optional mindestens ein Bildmerkmal und/oder Teilbildmerkmal für die Ermittlung eines bestimmten Schnittqualitätsmerkmals und wählt ein oder mehrere geeignete optische Merkmale, sowie optional Bildmerkmale und/oder Teilbildmerkmale aus. Das neuronale Netzwerkt sucht auch selbständig ein oder mehrere optische Merkmale, sowie optional ein oder mehrere Bildmerkmale und/oder Teilbildmerkmale für die Schneidqualitätsabschätzung und/oder für die Schneidregelung und wählt ein oder mehrere geeignete optische Merkmale, sowie optional ein oder mehrere Bildmerkmale und/oder Teilbildmerkmale aus.

Mit der Vorrichtung 300 werden die Bilder 200 im Schritt S2 des Verfahrens nicht durch Erfassen des Prozesslichts, sondern durch Erfassen des von der Prozesszone 12 reflektierten Beleuchtungslichts 305 mit der Bilderfassungseinrichtung 110, deren Sensor 113 für das Beleuchtungslicht empfindlich ist, erhalten. In einer Abwandlung dieses Ausführungsbeispiels ist der Sensor 113 der Bilderfassungseinrichtung 110 sowohl für das Prozesslicht 105, als auch für das Beleuchtungslicht 305 empfindlich und der dichroitische Spiegel 306 ist auch für das Prozesslicht transparent. Durch Ausschalten der Beleuchtungslichtquelle 304 und Abstimmen des Sensors 113 auf das Prozesslicht 105 wird im Betrieb das Prozesslicht 105 detektiert. Durch Einschalten der Beleuchtungslichtquelle 304 und Abstimmen des Sensors 113 auf das Beleuchtungslicht wird im Betrieb das Beleuchtungslicht detektiert.

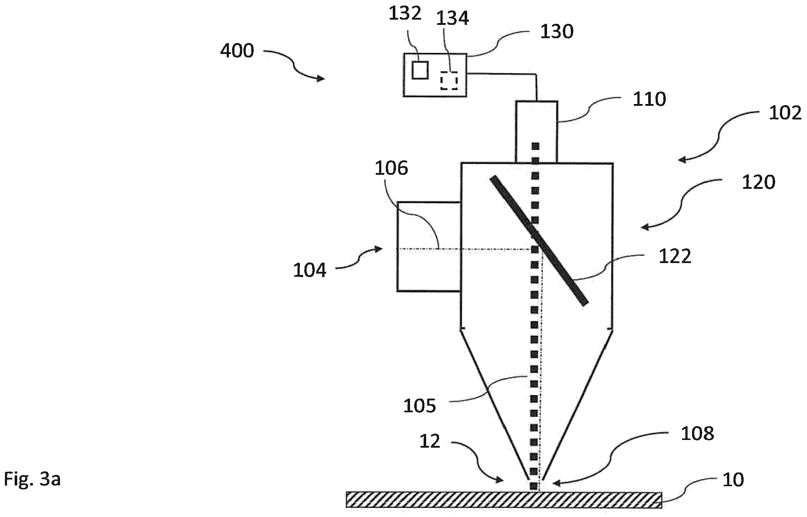

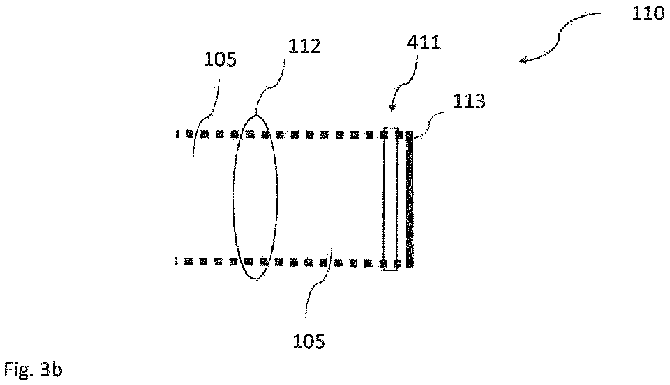

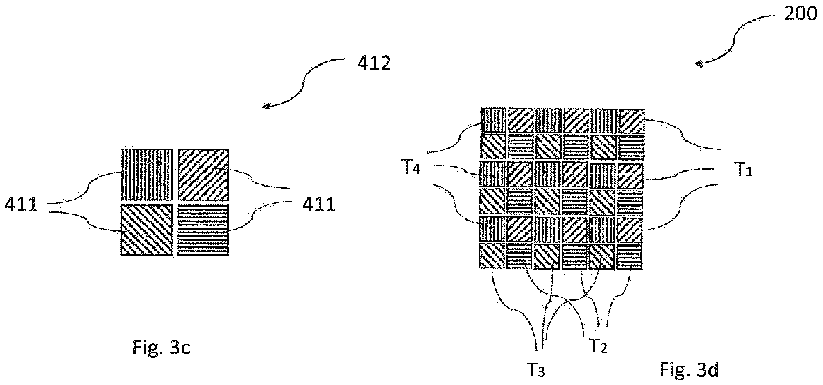

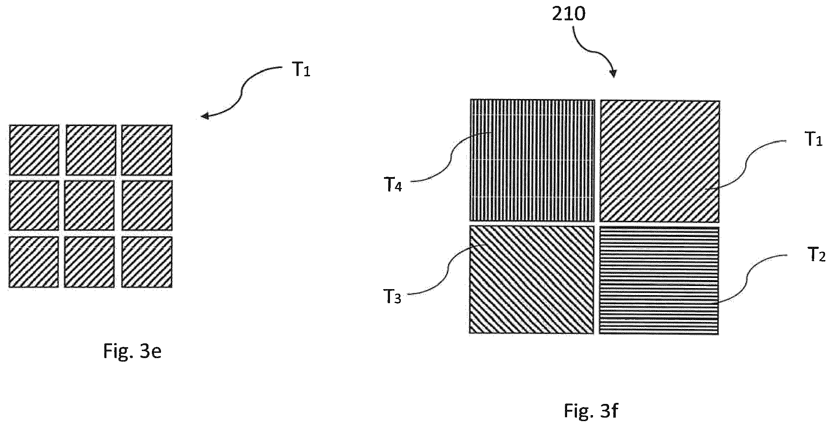

Ein Ausführungsbeispiel einer Vorrichtung 400 zum Laserschneiden eines Werkstücks 10 ist in Fig. 3a schematisch dargestellt. Die Vorrichtung 400 ist analog zur Vorrichtung 100 ausgebildet, wobei die Steuereinrichtung 130 wie in der Vorrichtung 300 vorgesehen ist. Im Unterschied zur Vorrichtung 100 enthält die Bilderfassungseinrichtung 110 der Vorrichtung 400 statt der Schar von flächig nebeneinander angeordneten Mikrolinsen 111 eine Schar von flächig nebeneinander angeordneten Mikropolarisationsfiltern 411, wie in Fig. 3b und 3c schematisch dargestellt. Die Schar von flächig nebeneinander angeordneten Mikropolarisationsfiltern 411 enthält eine Mehrzahl von flächig nebeneinander angeordneten 2x2-Einheiten 412, in denen jeweils vier unterschiedliche Polarisationsfilter mit Polarisationen von 0°, 45°, 90° und 135°, auch Polarisationswinkel genannt, flächig nebeneinander angeordnet sind. Eine der 2x2-Einheiten 412 ist in Fig. 3c gezeigt.

Das im Betrieb der Vorrichtung 400 beim Laserschneiden erzeugte Prozesslicht 105 durchläuft die Schar von Mikropolarisationsfiltern 411 und wird entsprechend unterschiedlich polarisiert auf den Sensor 113 gerichtet. Wie in Fig. 3d gezeigt, wird von der Sensorfläche des Sensors 113 im Schritt S2 des Verfahrens ein Bild 200 als ein Sensordatenfeld mit Teilbildern T₁ bis T₄ erfasst. Das Sensordatenfeld ist in Fig. 3d nur teilweise mit 36 Pixeln dargestellt. Im vorliegenden Beispiel entspricht eine 2x2-Einheit 412 der Mikropolarisationsfilter 411 jeweils einer Einheit des Sensors 113 von 2x2 Pixeln. Von allen 2×2-Pixel-Einheiten des Sensors 113 wird jeweils das Pixel mit einem der Polarisationswinkel, z.B. jeweils das Pixel mit dem 0° Polarisationswinkel, zu einem der Teilbilder T₁ bis T₄ des Bildes 200 kombiniert. Dies ist in Fig. 3d bis 3f anhand des Teilbildes T₁ veranschaulicht. Dabei wird die Polarisation selbst nicht vom Sensor 113 gemessen, vielmehr misst der Sensor die Intensität des erfassten Lichtes. Durch Vergleichen der Leistungen der zueinander gehörenden 2x2 Pixel, auf die eine 2x2-Einheit 412 der Mikropolarisationsfilter projiziert, können die Polarisationen abgeleitet werden. Dabei können der Polarisationswinkel, der Polarisationsgrad oder beide kombiniert ermittelt werden. Im Ergebnis wird eine Schar 210 von vier zeitgleichen Teilbildern T₁ bis T₄ mit unterschiedlichen Polarisationen von 0°, 45°, 90° und 135° erfasst, wie in Fig. 3f veranschaulicht. In anderen Ausführungsbeispielen können andere Polarisationswinkel der Einheiten 412 und/oder eine andere Anzahl von Polarisationen der Einheiten 412 eingesetzt werden. Dabei können die Einheiten 412 jeweils einer größeren oder kleineren Fläche des Sensors 113 von 2x2 Pixeln entsprechen. Ferner kann eine andere Anzahl von Teilbildern erhalten werden, die der Anzahl der erfassten Polarisationen entspricht. Eine Abwandlung der Vorrichtung 400 ist wie die Vorrichtung 300 mit einer Beleuchtungslichtquelle 304, einer entsprechenden Lichtstrahloptik 120 und einem auch für das Beleuchtungslicht empfindlichen Sensor 113 der Bilderfassungseinrichtung 110 ausgestattet, so dass das Prozesslicht 105 und/oder das Beleuchtungslicht 305 mit unterschiedlichen Polarisationen detektiert wird. Im vorliegenden Beispiel ist die Polarisation des erfassten Prozesslichts, insbesondere der Polarisationswinkel und/oder der Polarisationsgrad, als das wenigstens eine optische Merkmal vorgegeben.

In einer Abwandlung der Vorrichtung 400 ist der Strahlungsintensitätssensor 110 temperaturkalibriert. In der Steuereinrichtung 130 ist in diesem Fall eine Bestimmungseinheit 134 zur Bestimmung der Strahlungstemperatur des Prozesslichts 12 vorgesehen, wie in Fig. 3a mit gestrichelter Linie gezeigt. Damit wird aus mindestens einem der 1 bis n Bilder 200 eine Temperaturverteilung über und/oder in der Prozesszone 12 ermittelt, z.B. ein Temperaturfeld über der dreidimensionalen Geometrie der Prozesszone 12. Die Vorrichtungen 100 und 300 zum Laserschneiden können analog abgewandelt sein.

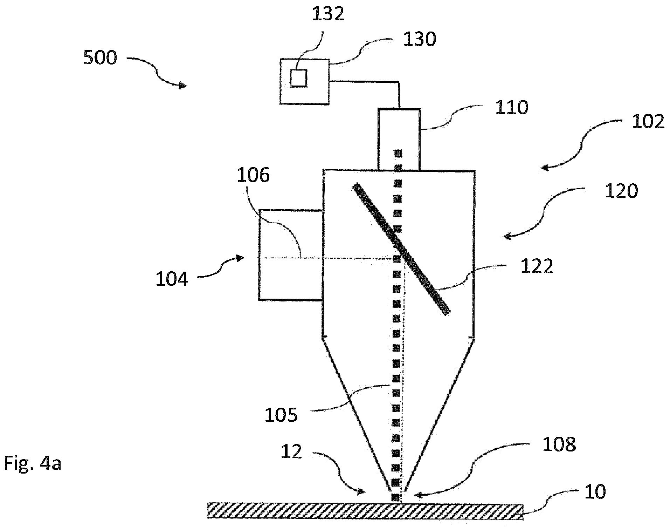

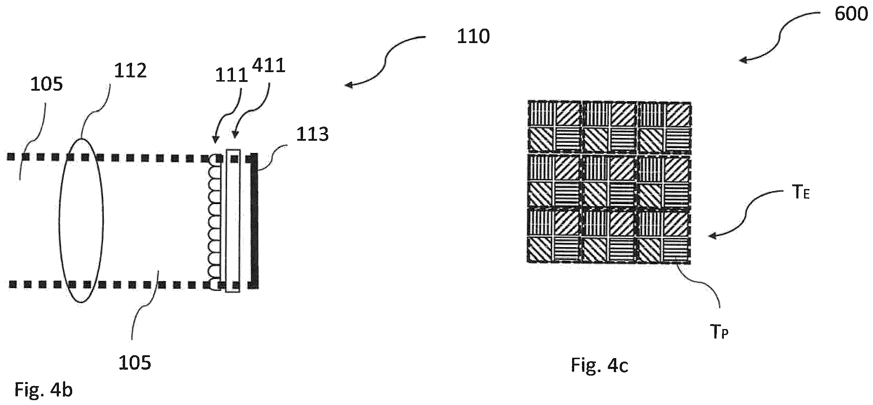

Ein Ausführungsbeispiel einer Vorrichtung 500 zum Laserschneiden eines Werkstücks 10 ist in Fig. 4a schematisch dargestellt. In der Vorrichtung 500 enthält die Bilderfassungseinrichtung 110 sowohl die Schar von flächig nebeneinander angeordneten Mikrolinsen 111 der Vorrichtung 100 als auch die Schar von flächig nebeneinander angeordneten Mikropolarisationsfiltern 411 der Vorrichtung 400, wie in Fig. 4b dargestellt. Die Schar von flächig nebeneinander angeordneten Mikrolinsen 111 und die Schar von flächig nebeneinander angeordneten Mikropolarisationsfiltern 411 sind hintereinander vor dem Sensor 113 angeordnet. In Ausbreitungsrichtung des Prozesslichts 105 ist die Schar von Mikrolinsen 111 vor der Schar von Mikropolarisationsfiltern 411 angeordnet. Diese Reihenfolge kann umgekehrt sein.

Im Betrieb der Vorrichtung 500 wird aufgrund der Kombination der Schar der Mikrolinsen 111 und der Schar der Mikropolarisationsfilter 411 das Prozesslicht 105 mit unterschiedlichen Erfassungswinkeln und unterschiedlichen Polarisationen von dem Sensor 113 im Schritt S2 des Verfahrens erfasst. Dadurch wird mindestens ein Bild 600 als ein Sensordatenfeld erhalten, das in Fig. 4c dargestellt ist. Mit den 2×2-Pixel-Einheiten des Bildes 600 werden jeweils unterschiedliche Erfassungswinkel und die vier unterschiedlichen Polarisationen erfasst. Durch die Schar von Mikropolarisationsfiltern 411 wird jedes Teilbild T_{E} unterschiedlicher Erfassungswinkel mit 2x2 = 4 Pixel in vier weitere Teilbilder Tp unterschiedlicher Polarisation unterteilt, wie in Fig. 4c gezeigt. Dies ergibt schließlich eine Schar von zeitgleichen Teilbildern T₁ bis Tₘ, wobei jedes Teilbild eine Auflösung von 1 Pixel besitzt. In einer Abwandlung dieses Beispiels (nicht gezeigt) werden mittels einer Schar von 8x8 Mikrolinsen 8x8 Teilbilder T_{E} zu je 400x400 Pixel erhalten. Der Sensor 113 besitzt demnach insgesamt 8x8x400x400 Pixel, was ungefähr 10 Megapixel ergibt. Durch die Schar von Mikropolarisationsfiltern 411 reduziert sich die resultierende Auflösung jedes Teilbildes T_{E} auf 200x200 Pixel. Dieses Ausführungsbeispiel ist geeignet für die Beobachtung einer typischen Prozesszone eines Schneidprozesses bei welchem der Schnittspalt eine Breite von 200-1000 um aufweist. Aufgrund der Kombination der Schar der Mikrolinsen 111 und der Schar der Mikropolarisationsfilter 411 werden mehr Informationen über den Schneidprozess erfasst und somit wird eine besonders genaue Schätzung der Schnittqualität ermöglicht. Die Ermittlungseinheit 132 enthält in einer Modifikation dieses Beispiels das neuronale Netzwerk 133 zur Ermittlung des Schnittqualitätsmerkmals aus der Schar von Teilbildern T₁ bis Tₘ, wie oben erläutert.

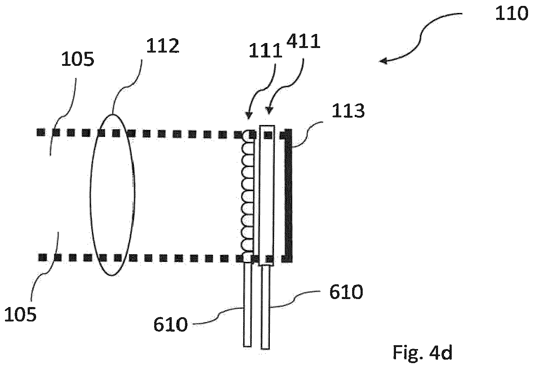

In einer Abwandlung der Vorrichtung 500 ist die Schar von nebeneinander angeordneten Mikrolinsen 111 und die Schar von nebeneinander angeordneten Mikropolarisationsfiltern 411 jeweils auf einer, z.B. mit einem Aktuator, verschwenkbaren Halterung 610 wie in Fig. 4d gezeigt vorgesehen. Die Halterungen 610 sind jeweils in einer Ebene, die von den Mikrolinsen 111 bzw. von den Mikropolarisationsfiltern 441 aufgespannt wird, verschwenkbar. Auf diese Weise sind die Mikrolinsen 111 und die Mikropolarisationsfiltern 411 unabhängig voneinander einzeln vor den Strahlungsintensitätssensor 113 in den Strahlengang des mit der Bilderfassungseinrichtung 110 zu erfassenden Lichtes vor den Sensor 113 verschwenkbar, z.B. zeitlich abwechselnd. So kann die Vorrichtung 500 flexibel betrieben werden, indem mit unterschiedlichen Polarisationen oder mit unterschiedlichen Erfassungswinkeln oder mit einer Kombination unterschiedlicher Polarisationen und unterschiedlicher Erfassungswinkel detektiert wird. In weiteren Abwandlungen ist nur die Schar von nebeneinander angeordneten Mikrolinsen 111 oder nur die Schar von nebeneinander angeordneten Mikropolarisationsfiltern 411 mit der Halterung 610 versehen. In Ausführungsformen können auch mehrere unterschiedliche Scharen von Mikrolinsen 111 und/oder mehrere unterschiedliche Scharen von Mikropolarisationsfiltern 411 auf verschwenkbaren Halterungen 610 vorgesehen sein. Dabei ist jede Schar einzeln mit einer verschwenkbaren Halterung 610 versehen. Auf diese Weise können die durch die Mikrolinsen bereitgestellten Erfassungswinkel und/oder die durch die Mikropolarisationsfilter bereitgestellten Polarisationen nach Bedarf variiert werden.

Eine weitere Abwandlung der Vorrichtung 500 ist wie die Vorrichtung 300 mit einer Beleuchtungslichtquelle 304, einer entsprechenden Lichtstrahloptik 120 und einem auch für das Beleuchtungslicht empfindlichen Sensor 113 der Bilderfassungseinrichtung 110 ausgestattet, so dass das Prozesslicht und/oder das Beleuchtungslicht mit unterschiedlichen Polarisationen und unterschiedlichen Erfassungswinkeln detektiert wird.

### Bezuaszeichenliste

- 10: Werkstück
- 12: Prozesszone
- 13: Werkstückoberfläche
- 100: Vorrichtung zum Laserschneiden
- 102: Schneidkopf
- 103: Schnittspalt
- 103a: Schneidrichtung
- 104: Schnittstelle
- 105: Prozesslicht
- 106: Bearbeitungslaserstrahl
- 107: Senkrechte auf die Werkstückoberfläche
- 108: Austrittsöffnung
- 109: Laserquelle
- 110: Bilderfassungseinrichtung
- 111: Mikrolinse
- 111a: Mikrolinse
- 112: Linse
- 113: Sensor
- 115: Spiegel
- 117: Transportfaser
- 120: Lichtstrahloptik
- 122: dichroitischer Spiegel
- 130: Steuereinrichtung
- 132: Ermittlungseinheit
- 133: neuronales Netzwerk
- 134: Bestimmungseinheit
- 200: Bild
- 210: Schar von Teilbildern
- 300: Vorrichtung zum Laserschneiden
- 302: Schnittstelle
- 304: Beleuchtungslichtquelle
- 305: Beleuchtungslichtstrahl, Beleuchtungslicht
- 306: dichroitischer Spiegel
- 400: Vorrichtung zum Laserschneiden
- 411: Mikropolarisationsfilter
- 412: Einheit der Mikropolarisationsfilter
- 500: Vorrichtung zum Laserschneiden
- 600: Bild
- 610: Halterung
- B: Erfassungswinkel
- f: Brennweite
- fz: Brennweite
- S1: Schritt
- S2: Schritt
- S3: Schritt
- T_{E}: Teilbild
- T_{P}: Teilbild
- Tz: Teilbild

## Patentansprüche

1. Verfahren zum Laserschneiden eines Werkstücks (10), mittels einer Vorrichtung zum Laserschneiden (100; 300; 400; 500) mit einem Schneidkopf (102);
mit den Schritten
Bestrahlen (S1) des Werkstücks (10) mit einem Bearbeitungslaserstrahl, Schneiden des Werkstücks (10) in einer Schneidrichtung (103a) und Erzeugen einer Prozesszone (12) und insbesondere Erzeugen eines Schnittspalts (103); und
Erfassen (S2) von 1 bis n Bildern (200; 600) der Prozesszone (12) in wenigstens einem Teil eines Beleuchtungslichts (305), das von der Prozesszone (12) reflektiert wird, und/oder in wenigstens einem Teil eines Prozesslichts (105), das durch eine Wechselwirkung des Bearbeitungslaserstrahls mit dem Werkstück (10) erzeugt wird und von der Prozesszone (12) emittiert wird, mittels einer Bilderfassungseinrichtung (110);
**dadurch gekennzeichnet, dass**
jedes der 1 bis n Bilder (200; 600) als eine Schar (210) von zeitgleichen Teilbildern T₁ bis Tₘ erfasst wird, wobei jedes der Teilbilder T₁ bis Tₘ der Schar (210) sich unterscheidet durch wenigstens ein optisches Merkmal ausgewählt aus
a. einem Erfassungswinkel (B) zur Prozesszone (12),
b. einer Brennweite (f; fz) einer Optik (111; 111a; 115) der Bilderfassungseinrichtung (110) in Richtung der Prozesszone (12), und
c. einer Polarisation des erfassten Prozesslichts (105) und/oder des erfassten Beleuchtungslichts (305);
und mindestens ein Schnittqualitätsmerkmal aus der Schar (210) von Teilbildern T₁ bis Tₘ mindestens eines der 1 bis n Bilder (200; 600) ermittelt wird (S3).

2. Verfahren nach Anspruch 1,
wobei die 1 bis n Bilder (200; 600) mit mindestens einem Strahlungsintensitätssensor (113) der Bilderfassungseinrichtung (110) erfasst werden, dem mindestens ein optisches Mittel vorgeschaltet wird oder ist, ausgewählt aus
- einer Schar von nebeneinander angeordneten Mikrolinsen (111) zur Erfassung des reflektierten Beleuchtungslichts (305) und/oder des Prozesslichts (105) aus mehreren einzelnen Erfassungswinkeln und/oder mit mehreren einzelnen Brennweiten;
- einer Schar von Spiegeln (115) zur Erfassung des reflektierten Beleuchtungslichts (305) und/oder des Prozesslichts (105) aus mehreren einzelnen Erfassungswinkeln unter kaleidoskopischer Mehrfachreflexion; und
- einer Schar von nebeneinander angeordneten Mikropolarisationsfiltern (411) zur Erfassung des reflektierten Beleuchtungslichts (305) und/oder des Prozesslichts (105) mit mehreren einzelnen Polarisationen.

3. Verfahren nach Anspruch 2,
wobei die Schar von nebeneinander angeordneten Mikrolinsen (111), die Schar von Spiegeln (115) zur Erfassung unter kaleidoskopischer Mehrfachreflexion und/oder die Schar von nebeneinander angeordneten Mikropolarisationsfiltern (411) dem Strahlungsintensitätssensor (113) in Ausbreitungsrichtung des Lichts räumlich hintereinander vorgeschaltet sind oder werden, und/oder
wobei die Schar von nebeneinander angeordneten Mikrolinsen (111), die Schar von Spiegeln (115) zur Erfassung unter kaleidoskopischer Mehrfachreflexion und/oder die Schar von nebeneinander angeordneten Mikropolarisationsfiltern (411) dem Strahlungsintensitätssensor (113) zeitlich abwechselnd vorgeschaltet werden.

4. Verfahren nach einem der vorstehenden Ansprüche,
wobei die 1 bis n Bilder (200; 600) mit mindestens einem temperaturkalibrierten Strahlungsintensitätssensor (113) erfasst werden und die Strahlungstemperatur des Prozesslichts (105) bestimmt wird; und/oder
wobei das mindestens eine Schnittqualitätsmerkmal basierend auf mindestens einem Element ausgewählt aus einer Geometrie der Prozesszone (12), insbesondere einer Geometrie des Schnittspalts, einer Temperaturverteilung über und/oder in der Prozesszone (12), insbesondere über und/oder in dem Schnittspalt (103), einer Geschwindigkeitsverteilung eines Schmelzbades in der Prozesszone (12), insbesondere in dem Schnittspalt (103) und /oder entlang des Schnittspalts, und mindestens einem Differenzbild der Geometrie der Prozesszone (12), insbesondere mindestens einem Differenzbild der Geometrie des Schnittspalts (103), als eine in der Schar (210) der Teilbilder von zumindest einem der 1 bis n Bilder (200; 600) enthaltene 3D-Information ermittelt wird.

5. Verfahren nach einem der vorstehenden Ansprüche,
wobei ein Beleuchtungslichtstrahl (305) einer Beleuchtungseinrichtung auf die Prozesszone (12) geleitet wird; und/oder
wobei der Bearbeitungslaserstrahl (106) und der Beleuchtungslichtstrahl (305) koaxial, insbesondere jeweils in einem Winkel von im Wesentlichen 90° zur Werkstückoberfläche (13), auf die Prozesszone (12) geleitet werden; und/oder wobei beim Erfassen der 1 bis n Bilder (200; 600) zumindest ein Teil des von der Prozesszone (12) reflektierten Beleuchtungslichtstrahls und/oder zumindest ein Teil des Prozesslichts (105) erfasst wird, der jeweils koaxial zum auf die Prozesszone (12) auftreffenden Bearbeitungslaserstrahl verläuft.

6. Verfahren nach einem der vorstehenden Ansprüche,
wobei Teilbilder mit einem Erfassungswinkel (B) in einem Bereich von 0° bis 20°, bevorzugt zwischen 0° und 15°, zur Prozesszone (12) ausgewählt werden; und/oder wobei die Schar von Mikrolinsen (111) und/oder die Schar von Spiegeln (115) eine Mehrzahl von Erfassungswinkeln (B) in einem Bereich von 0° bis 20°, bevorzugt zwischen 0° und 15°, zur Prozesszone (12) bereitstellen; und/oder wobei zur Ermittlung des Schnittqualitätsmerkmals Teilbilder mit einem gleichen Erfassungswinkel, einer gleichen Brennweite und/oder einer gleichen Polarisation aus der Schar (210) von Teilbildern T₁ bis Tₘ mindestens eines der 1 bis n Bilder ausgewählt werden; und/oder
wobei das Schnittqualitätsmerkmal aus der Schar (210) von Teilbildern T₁ bis Tₘ aus mindestens einem der 1 bis n Bilder mit mindestens einem neuronalen Netzwerk (133) ermittelt wird.

7. Vorrichtung (100; 300; 400; 500) zum Laserschneiden eines Werkstücks (10), insbesondere mit einem Verfahren zum Laserschneiden eines Werkstücks (10) nach einem der vorstehenden Ansprüche,
insbesondere zum Erzeugen eines Schnittspalts (103);
mit einem Schneidkopf (102);
wobei der Schneidkopf aufweist
- eine erste Schnittstelle (104) für eine Laserquelle zum Erzeugen eines Bearbeitungslaserstrahls (106); und
- eine Austrittsöffnung (108) für den Bearbeitungslaserstrahl;
und wobei die Vorrichtung zum Laserschneiden (100; 300; 400; 500) eines Werkstücks ferner aufweist
- eine Bilderfassungseinrichtung (110) zum Erfassen von 1 bis n Bildern (200; 600) der Prozesszone (12), insbesondere des Schnittspalts (103), in wenigstens einem Teil eines Beleuchtungslichts (305), das von der Prozesszone (12) durch die Austrittsöffnung (108) reflektiert wird, und/oder in wenigstens einem Teil eines Prozesslichts (105), das durch eine Wechselwirkung des Bearbeitungslaserstrahls mit dem Werkstück (10) erzeugt wird und von der Prozesszone (12) durch die Austrittsöffnung (108) emittiert wird; und
- eine Lichtstrahloptik (120), die zumindest teilweise im Schneidkopf vorgesehen ist und eine Einrichtung (122; 306) zum Leiten des Bearbeitungslaserstrahls in Richtung der Austrittsöffnung (108) und zum Leiten wenigstens eines Teils des durch die Austrittöffnung reflektierten Beleuchtungslichts (305) und/oder wenigstens eines Teils des durch die Austrittsöffnung (108) emittierten Prozesslichts (105) zur Bilderfassungseinrichtung (110) aufweist;
**dadurch gekennzeichnet, dass**
die Bilderfassungseinrichtung (110) zum Erfassen jedes der 1 bis n Bilder (200; 600) als eine Schar (210) von zeitgleichen Teilbildern T₁ bis Tₘ ausgebildet ist, wobei jedes der Teilbilder T₁ bis Tₘ der Schar (210) sich unterscheidet durch wenigstens ein optisches Merkmal ausgewählt aus
a. einem Erfassungswinkel (B) zur Prozesszone (12),
b. einer Brennweite (f; fz) einer Optik (111; 111a; 115) der Bilderfassungseinrichtung (110) in Richtung der Prozesszone (12), und
c. einer Polarisation des erfassten Prozesslichts (105) und/oder des erfassten Beleuchtungslichts (305);
und eine Ermittlungseinheit (132) zum Ermitteln mindestens eines Schnittqualitätsmerkmals aus der Schar (210) von Teilbildern T₁ bis Tₘ mindestens eines der 1 bis n Bilder (200; 600) vorgesehen ist.

8. Vorrichtung nach Anspruch 7,
wobei der Schneidkopf eine zweite Schnittstelle (302) für eine Beleuchtungslichtquelle (304) zum Erzeugen eines Beleuchtungslichtstrahls des Beleuchtungslichts (305), insbesondere eines Beleuchtungslaserstrahls, aufweist; und/oder
wobei die Lichtstrahloptik (120) eine Einrichtung (306) zum Leiten des Beleuchtungslichtstrahls (305) in Richtung der Austrittsöffnung (108) aufweist.

9. Vorrichtung nach einem der Ansprüche 7 und 8,
wobei die Bilderfassungseinrichtung (110) mindestens einen Strahlungsintensitätssensor (113) zum Erfassen der 1 bis n Bilder (200; 600) aufweist, dem mindestens ein optisches Mittel vorgeschaltet oder vorschaltbar ist, ausgewählt aus
- einer Schar von nebeneinander angeordneten Mikrolinsen (111) zur Erfassung des reflektierten Beleuchtungslichts (305) und/oder des Prozesslichts (105) aus mehreren einzelnen Erfassungswinkeln und/oder mit mehreren einzelnen Brennweiten;
- einer Schar von Spiegeln (115) zur Erfassung des reflektierten Beleuchtungslichts (305) und/oder des Prozesslichts (105) aus mehreren einzelnen Erfassungswinkeln unter kaleidoskopischer Mehrfachreflexion; und
- einer Schar von nebeneinander angeordneten Mikropolarisationsfiltern (411) zur Erfassung des reflektierten Beleuchtungslichts (305) und/oder des Prozesslichts (105) mit mehreren einzelnen Polarisationen.

10. Vorrichtung nach einem der Ansprüche 7 bis 9,
wobei die Schar von nebeneinander angeordneten Mikrolinsen (111), die Schar von Spiegeln (115) zur Erfassung unter kaleidoskopischer Mehrfachreflexion und/oder die Schar von nebeneinander angeordneten Mikropolarisationsfiltern (411) dem Strahlungsintensitätssensor (113) räumlich hintereinander vorgeschaltet und/oder vorschaltbar sind; und/oder
wobei die Schar von nebeneinander angeordneten Mikrolinsen (111), die Schar von Spiegeln (115) zur Erfassung unter kaleidoskopischer Mehrfachreflexion und/oder die Schar von nebeneinander angeordneten Mikropolarisationsfiltern (411) dem Strahlungsintensitätssensor (113) zeitlich abwechselnd vorschaltbar sind.

11. Vorrichtung nach einem der Ansprüche 7 bis 10,
wobei der mindestens eine Strahlungsintensitätssensor (113) temperaturkalibriert ist und eine Bestimmungseinheit (134) zur Bestimmung der Strahlungstemperatur des Prozesslichts (105) vorgesehen ist; und/oder
wobei die Ermittlungseinheit ausgebildet ist, das mindestens eine Schnittqualitätsmerkmal basierend auf mindestens einem Element ausgewählt aus einer Geometrie der Prozesszone (12), insbesondere einer Geometrie des Schnittspalts (103), einer Temperaturverteilung über und/oder in der Prozesszone (12), insbesondere über und/oder in dem Schnittspalt (103), einer Geschwindigkeitsverteilung eines Schmelzbades in der Prozesszone (12), insbesondere in dem Schnittspalt (103) und/oder entlang des Schnittspalts, und mindestens einem Differenzbild der Geometrie der Prozesszone (12), insbesondere mindestens einem Differenzbild der Geometrie des Schnittspalts (103) als eine in der Schar (210) der Teilbilder von zumindest einem der 1 bis n Bilder (200; 600) enthaltene 3D-Information zu ermitteln; und/oder wobei die Bilderfassungseinrichtung (110) mindestens ein Element ausgewählt aus einer Kamera, die das reflektierte Beleuchtungslicht und/oder das Prozesslicht aus mehreren einzelnen Erfassungswinkeln und/oder mit mehreren einzelnen Brennweiten erfasst, und einer Polarisationskamera aufweist.

12. Vorrichtung nach einem der Ansprüche 7 bis 11,
wobei an der ersten Schnittstelle (104) eine Laserquelle (109) zum Erzeugen eines Bearbeitungslaserstrahls (106) mit einer Leistung von mindestens 1 kW, bevorzugt mindestens 6kW vorgesehen ist; und/oder
wobei der Schneidkopf (102) mit mindestens einer weiteren Schnittstelle (302) versehen ist; und/oder
wobei an der zweiten Schnittstelle (302) und/oder an der mindestens einen weiteren Schnittstelle (302) des Schneidkopfs mindestens ein Element ausgewählt aus einem Teil der Lichtstrahloptik (120), einer Beleuchtungslichtquelle (304) zum Erzeugen des Beleuchtungslichtstrahls (305), insbesondere eines Beleuchtungslaserstrahls, und der Bilderfassungseinrichtung (110) angebunden ist; und/oder wobei die Lichtstrahloptik (120) zum koaxialen Leiten des Bearbeitungslaserstrahls (106) und des Beleuchtungslichtstrahls auf die Prozesszone (12), insbesondere in einem Winkel von im Wesentlichen 90° zur Werkstückoberfläche, ausgebildet ist; und/oder
wobei die Lichtstrahloptik (120) ausgebildet ist, mindestens einen Teil des von der Prozesszone (12) durch die Austrittsöffnung (108) reflektierten Beleuchtungslichts (305) und/oder mindestens einen Teil des von der Prozesszone (12) durch die Austrittsöffnung emittierten Prozesslichts (105), der jeweils koaxial zum auf die Prozesszone (12) auftreffenden Bearbeitungslaserstrahl verläuft, zur Bilderfassungseinrichtung (110) zu leiten.

13. Vorrichtung nach einem der Ansprüche 7 bis 12,
wobei die Ermittlungseinheit (132) ausgebildet ist, Teilbilder mit einem Erfassungswinkel in einem Bereich von 0° bis 20°, bevorzugt zwischen 0° und 15°, zur Prozesszone (12) auszuwählen; und/oder
wobei die Schar von Mikrolinsen (111) und/oder die Schar von Spiegeln (115) ausgebildet sind, eine Mehrzahl von Erfassungswinkeln in einem Bereich von 0° bis 20°, bevorzugt zwischen 0° und 15°, zur Prozesszone (12) bereitzustellen; und/oder wobei die Ermittlungseinheit (132) ausgebildet ist, Teilbilder mit einem gleichen Erfassungswinkel, einer gleichen Brennweite und/oder einer gleichen Polarisation aus der Schar (210) von Teilbildern T₁ bis Tₘ mindestens eines der 1 bis n Bilder (200; 600) zur Ermittlung des Schnittqualitätsmerkmals auszuwählen; und/oder wobei die Ermittlungseinheit (132) mindestens ein neuronales Netzwerk (133) zur Ermittlung des Schnittqualitätsmerkmals aus der Schar (210) von Teilbildern T₁ bis Tₘ aus mindestens einem der 1 bis n Bilder (200; 600) aufweist.

14. Vorrichtung nach einem der Ansprüche 7 bis 13,
mit einer Steuereinrichtung (130), die die Ermittlungseinheit (132) und/oder die Bestimmungseinheit (134), insbesondere jeweils als Programmodul, beinhaltet.

15. Computerprogrammprodukt, umfassend ein oder mehrere Programmmodule, die bewirken, dass die Vorrichtung nach einem der Ansprüche 7 bis 14 Schritte des Verfahrens nach einem der Ansprüche 1 bis 6 ausführt, insbesondere wenn die Programmmodule in einen Speicher der Vorrichtung geladen werden.
